# EUROPEAN PATENT SPECIFICATION

(11) **EP 3 541 497 B1**
(45) Date of publication and mention of the grant of the patent: **16.06.2021**
(21) Application number: 16836165.7
(22) Date of filing: 17.11.2016
(51) Int. Cl.: F23J 15/02, B01D 53/50, B01D 53/72, B01D 53/62, B01D 53/60, B01D 53/56, F23G 7/06

(54) **DEVICE FOR ABATEMENT OF LIQUID, GASEOUS AND/OR SOLID POLLUTANT SUBSTANCES OF VARIOUS KIND, CONTAINED IN THE EXHAUST SMOKES AND PROCESS FOR THE TREATMENT AND ABATEMENT OF SUCH POLLUTANT SUBSTANCES**
VORRICHTUNG ZUR BESEITIGUNG VON FLÜSSIGEN, GASFÖRMIGEN UND/ODER FESTEN SCHADSTOFFSUBSTANZEN VERSCHIEDENER ART UND VERFAHREN ZUR BEHANDLUNG UND BESEITIGUNG SOLCHER SCHADSTOFFSUBSTANZEN
DISPOSITIF DE RÉDUCTION DE SUBSTANCES POLLUANTES LIQUIDES, GAZEUSES ET/OU SOLIDES DE DIVERS TYPES, CONTENUES DANS LES FUMÉES D'ÉCHAPPEMENT ET PROCÉDÉ DE TRAITEMENT ET DE RÉDUCTION DE TELLES SUBSTANCES POLLUANTES.

(43) Date of publication of application: 25.09.2019
(73) Proprietor: Eprotech S.R.L., 31053 Pieve di Soligo (TV) (IT)
(72) Inventor: SONEGO, Alessandro, 33077 Sacile (PN) (IT); VARIOLA, Diego, 31015 Conegliano (TV) (IT)
(74) Representative: Dalla Rosa, Adriano
(86) International application number: PCT/IT2016/000271
(87) International publication number: WO 2018/092161

(56) References cited:
- US-A- 4 076 606
- US-A- 5 397 444
- US-A1- 2004 101 451
- US-A1- 2006 070 372
- US-A1- 2016 145 515

## Description

The invention relates to a device according to claim 1 for the treatment of liquid, gaseous and/or solid pollutant substances of various kind, contained into the exhaust smokes, which is so structured as to resolve pollutant complex molecules into not pollutant elementary molecules and substances before the smokes be discharged in the environment, in such a way that to reduce considerably the environment impact.

The invention also relates to a process according to claim 6 for the treatment and abatement of such pollutant substances, for obtaining the above mentioned effect.

As it is known, the emission of pollutant substances, produced by various sources, provides for a change of environmental conditions, and first of all of the air quality, which in the long run cause or may cause harmful effects to the health. Generally, the atmospheric pollution is because of combustion processes of substances of various kind, above all during the operation of civil or industrial thermic plants, and the traffic of vehicles powered by explosion engines. Many studies and searches have been effected for treatment of the combustion smokes, in order to reduce or possibly eliminate the emission of pollutant substances in the atmosphere, and this at the present time is obtained with various processes and systems.

The solutions which are currently employed in a wide extent for abatement of the pollutant substances of the combustion smokes are the following.
- Pre-depuration: the main systems employed are the deposition chambers or cyclones and multi-cyclones, in which the treatment of the contained air is obtained by the partial abatement of the pollutant substances contained into the exhaust smokes by means of the gravity force or the inertia force of the particles of the substances contained into the same smokes.

The drawbacks deriving from the use of these systems for abatement of smokes consist in that:
- they serve for removing the powdered substances or the rough materials only, therefore the efficiency of such abatement systems depends on the type of pollutant substance being treated;
- the operation of these systems require necessarily the presence of other depuration systems connected to the abatement system employed from time to time ;
- textile filtration : abatement system which is realized by letting the air flow to pass through some filters constituted by textile fiber of various kind ;

The drawbacks deriving from the use of these systems for abatement of smokes consist in that:
- they aren't suitable for each type of powdered substances (no adhesive powders or liquids) ;
- they may be used for the treatment of smokes with low temperatures only (about max. 140° C), and which cannot be used on to powders, gases and combustible steams.
- Electrostatic precipitation : process which utilizes a high voltage electric field for loading the solid or liquid particles of the pollutant substances being deposited by electrostatic attraction on to the electrode, from which they are then removed ;

The drawbacks deriving from the use of these systems for abatement of smokes consist in that:
- to require necessarily periodical checking for the maintenance for possible mechanical or electrical problems;
- not suitable for being utilized for powders of the pollutant substances with low resistivity ;
- to require low operation temperatures (max. 270°C) ;
- to be much expensive.
- Wet abatement: this kind of process, also called washing process, foresees the removal of the pollutant substances into a gaseous flow by means of the action of a liquid, normally the water.

The drawbacks deriving from the use of these systems for abatement of smokes consist in that:
- the particulate must have low concentrations ;
- a production of muds and waste liquids is determined, which can be disposed of with difficulty.

There are also existing further systems and processes specialized for abatement of more pollutant factors, consisting in :
- Plasma torches : they consist of systems for abatement of smokes which utilize the very high temperature (up to over 6000° C) reached by some materials, usually gas like argon and air, when they found themselves at the plasma state, for reducing the residual particles of smokes at the elementary state ;

The drawbacks deriving from the use of these systems for abatement of smokes consist in that:
- to be little used owing to the very high costs of the plants and the operation thereof ;
- they provide for the production of NO x and a strong volatility of the pollutant elements into the smokes ;
- to be able to be used for the plants having reduced overall dimensions only ;
- to require a continuous maintenance, which cannot be sustained owing to the quick consumption of the electrodes (after about 400 hours of continuous work).
- Catalytic ceramic post-heaters : these systems for abatement of smokes use the thermal oxidation at high temperature for transforming the component parts of the pollutant substances, by exploiting the presence of a catalyst.

The drawbacks deriving from the use of these systems for abatement of smokes consist in :
- the high cost of the catalyst;
- the impossibility to work at high temperatures ;
- not optimal efficiencies, relative to the physical and mechanical wearing of the catalyst;
- they are not suitable for abatement of all the types of pollutant composed substances.
- Catalytic conversion : such a process consists to the fact to promote, by means of a proper sponge of catalytic material, the conversion of the unburnt hydrocarbons, the nitrogen oxides, and the carbon monoxide into the carbon dioxides, water and nitrogen ; such an abatement system is utilized into the catalytic mufflers for reducing as much as possible the quantity of the above mentioned substances into the exhaust gases.

The drawbacks deriving from these systems for abatement of smokes consist in that:
- they are rather ineffective during the first minutes of operation of the car (the system operates correctly when a temperature between 300 °C and 900 °C is reached) ;
- they are scarcely effective during the acceleration and deceleration steps (the air/fuel ratio is variable too fast) ;
- the catalyst may deteriorate itself in the course of time because of the presence in the exhaust gases of small quantities of sulphur and lead ;
- the 80-90% of the pollutant substances are at the utmost eliminated.
- Condensation: in this process for abatement of smokes the steams of the pollutant substances are removed by changing their physical state from gaseous to liquid, with a pressure increase and/or a temperature reduction.

The drawbacks deriving from these systems for abatement of smokes consist in that:
- to be limited to processes of organic nature ;
- the most part of the applications requires additional abatement systems;
- the more stressed parts of these systems may be subjected to erosion or incrustation ;
- they are needed periodical normal maintenance and cleaning operations.
- Biological filtration : this process for abatement of smokes exploits the biological oxidation, in that the polluted air is lets to pass through a means into which some micro-organisms are present, which are suitable for decomposing the pollutant substances, by utilizing these latter as nourishing source for such micro-organisms.

The drawbacks deriving from the use of these systems for abatement of smokes consist in that:
- to require specific and accurate designs for being utilized in an optimal way ;
- a complex management of the biological filters ;
- the possibility to utilize such systems solely with air flows with low concentration of pollutant substances;
- they aren't suitable for being utilized with smoke flows into which toxic substances for the micro-organisms are present;
- to require a frequent monitoring for keeping a satisfying efficiency.

From what it has been specified, it is to point out that the currently used systems for abatement of smokes involve a series of functional drawbacks, consisting in that:
- to require high costs for the operation and the maintenance or the renewal of the plants, which do not allow a spreading on a large extent thereof;
- to require high costs for some of the plant component parts ;
- not to be suitable for the abatement of all the types of pollutant substances ;
- to be suitable to operate with limited utilization temperatures only ;
- to produce, in some cases, other pollutant substances.

Document US5397444A discloses a process for removal of SO2 and NOx from combustion flue gases which is subjected to irradiation by an electron beam and to the action of microwaves applied in the form of a continuous and/or pulsed stream. The stream of flue gases irradiated by the electron beam in the radiation zone is subjected to the action of microwave energy in the whole cross section of the stream of the flue gases. This results in a decrease in the dose rate "average power of the electron beam" and a reduction in the costs of accelerators while retaining the same removal efficiency. Further, the apparatus for removal of SO2 and NOx from combustion flue gases is provided in a radiation process in which a stream of accelerated electrons and microwave energy are used simultaneously.

Document US4076606A discloses a method of decomposing NOx which includes exciting effluent gas containing nitrogen and NOx. or nitrogen. NOx and oxygen and/or carbon dioxide, and so on. with microwave irradiation.

Document US2006/070372A1 discloses an exhaust gas reactor, which utilizes microwave energy to create a plasma whereby chemical reactions are promoted. Such reactions serve to reduce pollutant emission. The processor has a microwave-resonant cavity formed either in an exhaust passage of a combustion chamber or in the combustion chamber itself, the cavity receiving in either case exhaust gas released by combustion in the chamber. Subjection of the exhaust gases to microwaves causes them to form a plasma in which chemical reactions take place.

The object of the present invention concerns a device with special constructive characteristics for treating the pollutant substances by microwaves, which is different and new' with respect to the prior art disclosed by said documents described above.

The object of the invention is also to make available a process for the treatment of abatement of such pollutant substances, for obtaining the above described purposes.

The invention will be better understood by the following description, given by way of a not limiting example only, of the constructive and functional characteristics of the device referred to, and of the steps of the above described process for the treatment of abatement, with particular reference to the attached drawings, in which :
Figure 1 shows a schematic perspective front view of the device for abatement of smokes in accordance to the present invention, and the different component parts thereof;
Figure 2 shows a perspective front view of one of the component parts of the device of the Figure 1, separated from the other component parts of the same device ;
Figure 3 shows a perspective view from below of the component part of the Figure 2 ;
Figure 4 shows a perspective view from below of a portion of the component part of the Fig. 3 ;
Figure 5 shows a longitudinally cutaway view of the component part of the Fig. 2, with its internal component parts ;
Figure 6 shows a schematic front view of the back part of another component part of the device for abatement of smokes of the Fig. 1 ;
Figure 7 shows a perspective front view of the component part of the Fig. 6 ;
Figure 8 shows a perspective front view cutaway in a longitudinal direction of the component part of the Fig. 6 ;
Figures 9a and 9b show schematically the interaction among dipoles of molecules of materials, respectively in absence of an external electromagnetic field, and in presence of an external electromagnetic field, generated by microwaves, for obtaining the heating of materials for the effect of the microwaves in accordance to a first physical principle ;
Figures 10a and 10b show schematically an atom of material respectively in absence of an external electromagnetic field, and in presence of an external electromagnetic field, like that generated by the microwaves, for obtaining the heating of the material referred to for the effect of the microwaves, according to a second physical principle ;
Figure 11 shows the diagram temperature/heating time in presence of the microwaves of some of the materials which may be used in the device according to the invention ;
Figure 12 shows a longitudinally cutaway and enlarged view of the component part of the Fig. 5, with its internal component parts, with the path of a microwave passing through said internal component parts, and the physical effects which are determined along the entire path of such a microwave.

The invention relates to a device for abatement of liquid, gaseous and/or solid pollutant substances of various kind according to claim 1. This abatement device will be described in detail in the following Figures, together with the process for the treatment and abatement of the pollutant substances, and to the different steps of this process. Such a device being adapted for resolving the most part of the pollutant complex molecules into elementary and not pollutant molecules and substances before the smokes be discharged into the environment, in a way that they may be discharged in the environment without determining the pollution thereof.

The physical process with which the resolving of the pollutant substances into single not pollutant component substances are obtained is the thermal dissociation, in which the breaking of a complex molecule into more simple molecules, or of a compound into other compounds or quite into its constituting parts is obtained by heating at high temperatures (usually greater than 160G °C) of the exhaust smokes containing the pollutant substances of various kind.

Such a dissociation, which occurs by absorbing heat, is represented like a homogeneous or heterogeneous chemical reaction, the balance of which is changed in the sense to active the decomposition when the temperature increases. The temperature to which such a process occurs depends on the compound or the molecule referred to, but usually it is too high.

Examples of forming and consequently decomposition of some molecules of pollutant gases :
- NOx : nitrogen oxides, where "x" is utilized for identifying in a generic way all the nitrogen oxides, therefore it indicates the different number which can be present of atoms of nitrogen and oxygen bonded to each other. The nitrogen oxides which have been checked during a combustion are mainly the nitrogen monoxide (NO) and the nitrogen dioxide (NO2). During the combustion, the nitrogen N2 and the oxygen O2 react to each other at high temperature, by forming the nitrogen monoxide which, in turn, by oxidizing itself forms the nitrogen dioxide in accordance to the following relations :

   N2 + O2 ↔ 2NO

   2NO+ O2 ↔2NO2

At the high temperatures, usually over 1600 °C, the molecules of nitrogen (N2) and oxygen (O2) dissociate themselves into their atomic states. In order to achieve a good decomposition, therefore, the temperatures and the times must be checked, in a manner that an excessive production of NO during the heating and an excessive production of NO2 during the cooling be avoided.

In fact, the quantities of NO depend on :
- combustion temperature : the higher the combustion temperature and the greater the production of NO;
- persistence time at such temperatures of the combustion gases : the greater the persistence time the higher the production of NO ;
- quantity of free oxygen contained in the flame : the more limited the excess of the combustion air, the lower the production of NO with respect to the production of CO.

On the contrary, the production of NO2 increases with the temperature decrease, therefore during cooling of smokes. Such a production is proportional to the concentration of O2 and to the square of the concentration of NO. The slower the cooling, the greater the production of N02. Since the solutions employed for the abatement of the pollutant substances have been already considered, it is therefore now proposed a schema summarizing the solutions currently used specifically for reducing the emissions of NOx, and which are distinguished in:
1. PRIMARY TECHNICS (used for reducing the NOx during the combustion)
   - Flame cooling : the water or steam are injected into the combustion chamber, which use the thermic energy for evaporating or overheating, with the result to lower the flame temperature and consequently to reduce the production of NOx.
   - Combustion at steps : a combustion is obtained (the temperature of which is lower than the flame adiabatic temperature) by letting some steam generating tubes to pass in the interior of the combustion chamber, which tubes absorb some heat from the reaction (heat extraction step), by lowering the temperature (1027 °C).

   After such a step, a reheating is realized in which, by adding the remaining part of combustible, another combustion is started for reaching again the stoichiometric conditions.
2. SECONDARY TECHNICS (used for reducing the NOx before the smokes are coming out from the plant) : they consist mainly in the injection into the flow of burnt gases of ammonia, urea or other compounds suitable for reacting with the NOx, for promoting the reducing effects.
   - Selective not catalytic reduction : process based upon the selective reduction, by the ammonia or the urea, of the nitrogen oxides in absence of catalysts and therefore it occurs at high temperatures (from 850 °C to 1100 °C).
   - Selective catalytic reduction : process based upon the selective reduction, by the ammonia or the urea, of the nitrogen oxides in presence of a catalyst. The reduction of the NOx occurs on to the surface of the catalyst at a temperature comprised from 320 °C and 400 ° C.
   - SO2 : the generation of SO 2 is strictly correlated to the content of sulphur in the combustible being used. The production of SO 2 is formed by the combustion of the sulphur with air in accordance to the following process :

      S + O2 → SO2

It decomposes itself, over the 2000° C, in S and SO3, SO and O :

SO2 → SO+O

2SO2 → SO3 + SO

3SO2 → 2SO3 + S

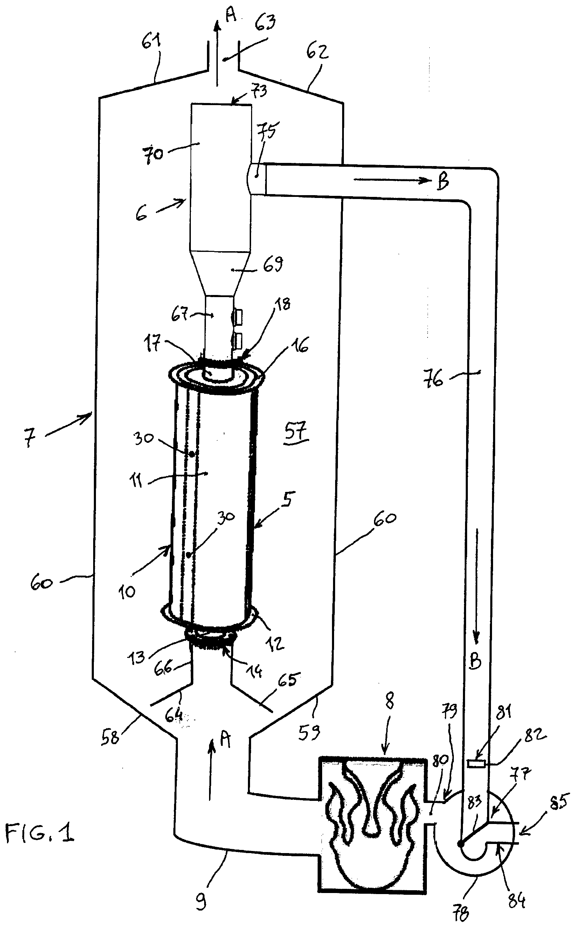

By referring to the Fig. 1, it is now described synthetically the device for abatement of the liquid, gaseous and/or solid pollutant substances of various kind contained into the exhaust smokes, and the different component parts of the same device. Such a device is constituted substantially by the following main component parts :
- heating module 5, through which the exhaust smokes containing the pollutant substances to be abated are let to pass, and in the interior of which there are installed the component elements which will be described, so shaped as for producing internal temperatures of the module 5 which are typically from about 1200 °C up to about 2200 °C, and which determine the heating of smokes at these temperatures, in order to dissociate at the most wide extent and in the manner and with the physical phenomena which will be described the molecules of the different compounds constituting such pollutant substances , in order to let coming out from the module the smokes containing a high percentage of single not pollutant component substances, which could so be discharged afterwards in the environment;
- module 6 for partial recovering of the exhaust smokes, connected to the heating module 5 and adapted to recover partially the purified smokes that are coming out from such a heating module 5, in the manner and for the functions that will be described;
- flue 7 enclosing the heating module 5 and the module 6 for partially recovering of smokes, and shaped as it will be described, which is connected with its inlet to the combustion chamber 8 of the pollutant products through a conduit 9 and is provided for conveying and discharging in the outer environment the smokes coming out from the heating 5 and the module 6 for partial recovering of the smokes. All the component parts of the device illustrated in the Fig. 1 will be described in detail later on, after the description of the arrangement of the heating module 5 and the module 6 for partial recovering of smokes.

Turning now to the Figs. 1-4, in which the structural configuration of the heating module 5 is shown, it is noted that it is substantially constituted by a lengthened container 10 comprising an outer envelope 11 preferably of cylindrical shape, but which may be shaped also with other geometrical shapes, which is made of a not magnetic metallic material, withstanding the high temperatures and impermeable to the microwaves and delimiting an inner chamber, multi-modal or with dimensions greater than the electromagnetic wave spreading inside thereof (not indicated in the Figures), which chamber is suitable for containing the component parts which will be described. As metallic material it may be utilized advantageously but not exclusively the stainless steel AISI 304. The metallic outer envelope 1 i is closed at its lower end portion by a flat closing disc 12 preferably of circular shape, which is also made of mechanically withstanding metallic material and impermeable to the microwaves, which may be of the same type of material of the outer envelope 11, said disc 12 being joined sealingly with a short vertical cylindrical sleeve 13 directed downward, also of metallic material having the same characteristics of the preceding metallic materials, which is bored axially and internally for its entire length for communicating with said inner chamber.

The vertical sleeve 13 is welded at its lower end portion with a flat joining flange 14, in the example shaped of circular form and made of mechanically withstanding metallic material, suitable for withstanding the high temperatures for the contact with the gases deriving from the combustion and stable at the high temperatures. In turn, the joining flange 14 is provided with a central through hole 15 coinciding with the hole (not indicated) of the sleeve 13 and is screwed on and fixed to a correspondent component part of the flue 7, as it will be described. The metallic outer envelope 11 is closed at its opposite end portion, from which the smokes are coming out and passing, which smokes are directed toward the module 6 for partial recovery of smokes (in this case, the upper end portion), in the same way of the lower end portion namely with a flat closing disc 16 preferably of circular shape, which is joined sealingly with a short vertical cylindrical sleeve 17 directed upward, which sleeve is welded at its upper end portion with a flat joining flange 18, in the example of circular shape, which is secured sealingly with the inlet end portion of the module 6 for partial recovering of smokes as it will be described. Also in this case, the upper closing disc 16 and the vertical sleeve 17 are made of the same material and shaped in the same manner of the correspondent elements of the lower end portion of the outer envelope 11.

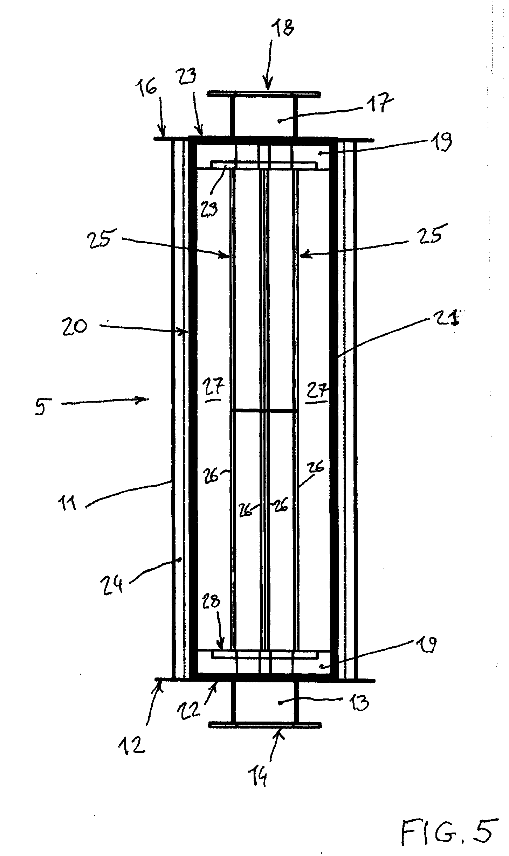

By referring now to the Fig. 5, in which it is shown the inner chamber 19 (multi-modal or having dimensions greater than the electromagnetic wave spreading therein) of the outer envelope 11 of the heating module 5, it is noted that the same is delimited by a lengthened internal cylindrical container 20 made of mechanically withstanding metallic material and impermeable to the microwaves, which may be constituted for example by stainless steel AISI 304 or other suitable material with these characteristics, such an internal container being shaped with a vertical peripheral wall 21 having the same length and smaller diameter with respect to the outer envelope 11, which peripheral wall is joined at its end portions by a lower disc 22 and an upper disc 23, and these elements are housed in a way that between the outer envelope 11 and the internal container 20 a free space be defined, into which an insulating material 24 be inserted, which covers all the internal peripheral surface of the outer envelope 11 and all the external peripheral surface of the lengthened container 20. Such an insulating material 24 may be constituted for example of mineral wool or other suitable thermic insulating material withstanding the high temperatures.

In the central zone of the lengthened internal container 20 there are housed and secured one or more lengthened vertical rectilinear tubes 25, through the inner cavity of which the smokes containing the pollutant substances are let to circulate, and such tubes are made of the material and for performing the function which will be described later on.

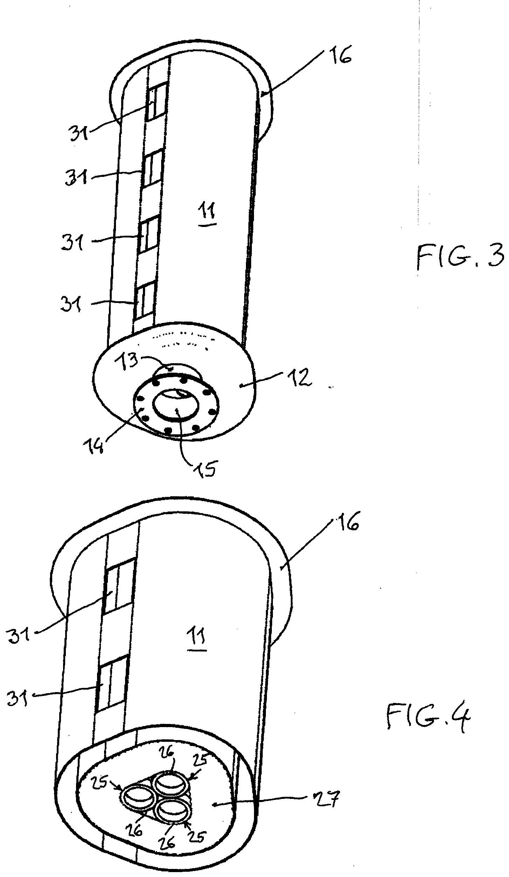

In the example referred to, there are provided three lengthened tubes 25 which, as visible from the Fig. 4, are at physical contact with the outer surface of their walls 26, for allowing a thermic transmission among all the tubes. In the space comprised among the vertical tubes 25 and the outer surfaces of the walls 26 of all the tubes 25 it is inserted an internal insulating material 27 for the entire height of the same tubes, which material fully covers all the outer surfaces of the walls 26 of the same tubes, and the surfaces of the lower and upper end portions of such an internal insulating material 27 are covered by a respective plug 28 and 29 of the same insulating material, which is secured on to the same surfaces, and is bored for permitting the passage of smokes in the interior and is joined sealingly at the lower side with the underlying sleeve 13 and at the upper side with the overlying sleeve 17, and said vertical tubes 25 are extended from the plug 28 to the plug 29.

Such an internal insulating material 27 is a not-organic material or of any other type, suitable to withstand temperatures comprised between - 50° C and 3000 °C, with characteristics of radio-transparency to the frequencies comprised between 0,2 GHz and 5 GHz, therefore to the microwaves frequencies, to have a high mechanical strength, a capacity to be machined and to withstand the contact with the smokes deriving from the combustion reaction and submitted to processes of thermal, physical and chemical type as well as to pyrolysis phenomena, in the interior of the hollow tubes 25.

An example of insulating material which may be utilized is constituted by a product made with polycrystalline fibers having a high content of alumina, which is mixed with the not-organic binders and withstands 1600 °C. For measuring the temperature of the internal chamber 19 of the heating module 5 there are provided preferably two optical pyrometers (not indicated), fixed in the interior of such a chamber 19 in two positions offset to each other in the vertical direction and entering the chamber through correspondent through holes 30, provided in positions coincident to each other through the outer envelope 11, the vertical peripheral wall 21, and the insulating materials 24 and 27, of which the relative optical part is visible from outside, and which are electrically connected to a control central station (not shown) connected to the electric circuit of the present device, in order to detect steadily the internal temperature of the heating module 5.

Such a heating module 5 is also provided with a plurality of through openings 31 provided through the outer envelope 11 and the vertical peripheral wall 21, in positions coinciding to each other, which through openings are aligned and adequately spaced away from each other in the vertical direction, and in the Figures such through openings 31 are for example in the number of 4, but of course they may be made also with different numbers thereof.

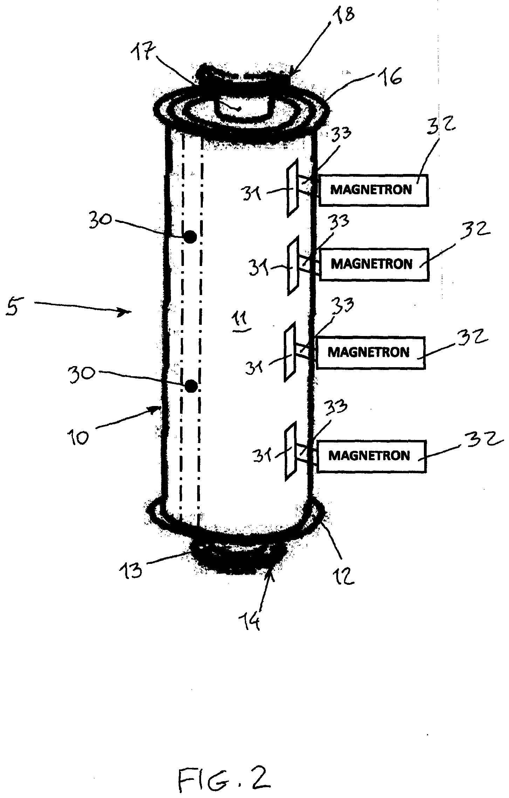

As visible from the Fig. 2, such through openings 31 are communicating with at least a relative microwave generator 32 (magnetron), through correspondent waveguides 33connected sealingly between the microwave generator 32 and the through openings 31, in such a way that the microwaves generated by the generator 32 be distributed, directed and let to interfere with the material constituting the vertical tubes 25, for obtaining the effects which will be described hereinafter. The microwaves generated by the generator 32 may be transmitted to the vertical tubes 25 even in different manners with respect to what just specified, thus without departing from the protection sphere of the present invention.

The microwave generator 32 is of per se known type and is disposed externally the outer envelope 11 and enclosed by an outer casing (not indicated), together with all the component parts of the present device for abatement of the pollutant substances.

Such a microwave generator may be regulated in such a way as to generate microwaves with a power comprised preferably between 200 W and 20000 W.

There may be provided also more microwave generating sources, in a number multiple of one, each one having the same above described output.

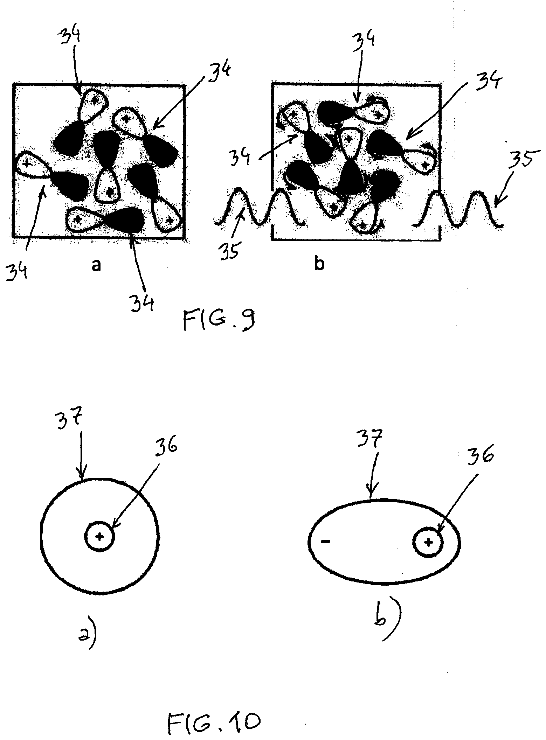

Now, there are described the causes for obtaining the heating of the material for effect of the microwaves, and this in order to explain how the pollutant smokes circulating through the present device are abated in large extent in presence of the microwaves. A first cause is produced by the interaction among the dipoles contained into a material, wherein, as it is known, the dipoles are pairs of particles with opposed electric charge, that is positive and negative, contained into a material. In this case, the produced thermic effect is a consequence of the interaction dipole-dipole among the molecules of the material in presence of an electromagnetic field, like the one generated by the microwaves. With particular reference to Fig. 9, it is shown how this thermic effect produced by the interaction among dipoles is revealed. In particular, in the Fig. 9a there are schematically shown various dipoles 34 contained into a material. Such dipoles 34 are oriented at random, no orientation direction is privileged, in absence of one alternate electric filed, such as for example the one produced by the microwaves acting on to the material referred to.

On the contrary, in the Fig. 9b, it is noted that the presence of an alternate electric field, such as for example the one produced by the microwaves, acting on to the same material, the dipoles 34 change orientation at each alternance of the alternate electric field. If the electric field is of the high frequency type (for example, of 2,45 GHz), in presence of microwaves, such an alternate electric field 35 induces an agitation and an intermolecular friction (and therefore among the various dipoles 34), with consequent production of heating and therefore the emission of infrared rays. A second cause of production of heating is produced by the physical phenomenon of the dielectric relaxation. In the Fig. 10 it is schematically noted the internal nucleus 36 of an atom of a material (having positive charge) and the electrons rotating around the nucleus 36 (having negative charge), which are schematically represented as a "cloud" of electrons rotating around an orbit 37. In such a case, in absence of an alternate electric field, thus in the balanced condition, the electronic "cloud" is distributed along the orbit 37 equally around the nucleus 36.

In presence of an alternate electric field, such as for example the one produced by the microwaves interacting with the same material, the electronic "cloud" rotating around the orbit 37 is deformed and is moved (see Fig. 10b), for example as it is illustrated in this Figure, with the consequent origin of a polarization that will reach the maximum deformation when the perturbation produced by the alternate electric field will reach the maximum level. By reducing the intensity of such a perturbation, such an electronic "cloud" will tend to reach again its balanced condition, as above described, and under this circumstance the return to the balanced condition of the same electronic "cloud" involves the releasing of heat and therefore the generation of infrared radiations.

The more the temperature to which a material is submitted is high, the greater is the ray of the orbit 37 of the electronic "cloud" and, consequently, it is simpler to deform the same orbit. An additional cause of production of the heating is determined by the Joule effect, in which into a semi-conductor material exposed to an electric field there are induced displacements of electric charges, with consequent releasing of heat for the Joule effect.

Now, if the device according to the present invention is considered, the microwaves generated by the magnetron 32 are directed against the surface of the lengthened tubes 25, housed into the heating module 5 and crossed by the smokes containing the pollutant substances and constituted by the so-called acceptor material, and the energy flow of such microwaves arriving on to the surface of such lengthened tubes 25 in tne time unit and on to the surface unit of this acceptor material is reflected in part (reflecting capacity) in to the direction opposite to the one where the microwaves are arriving, in part it is absorbed by the acceptor material of said lengthened tubes 25 (absorbing capacity), and in part passes through the wall of the same acceptor material (semi-transparent capacity).

The absorbing capacity of the acceptor material of the lengthened tubes 25 depends on the physical characteristics of the incident radiation (and therefore of the microwaves) and the nature of the same acceptor material.

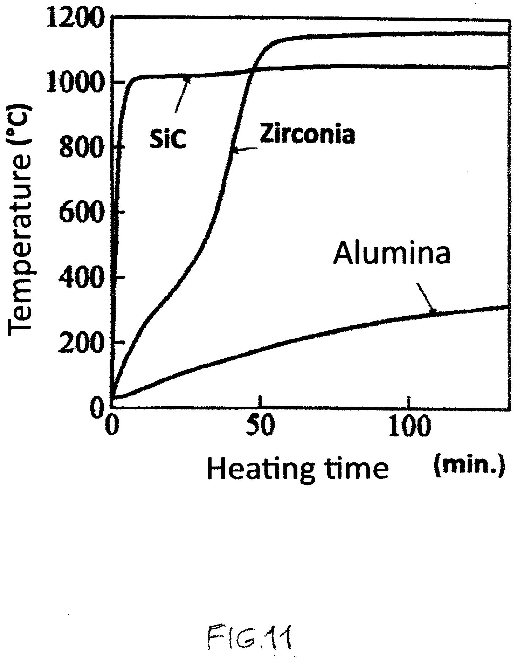

In the Fig. 11 it is illustrated a diagram temperature/time of heating in presence of the microwaves of some materials that may be used as acceptor materials, that is materials that keep and absorb the microwaves energy, for realizing the lengthened tubes 25 for smokes circulation of the present device. As acceptor material there have been selected the silicon carbide (SiC) and the zirconia, that is zirconium oxide (ZrO2), that have revealed to be good acceptor materials, and the characteristics of these materials are compared with the ones of a refractory material, like alumina (Al2O3). The diagram has been obtained with the following conditions: frequency f of the microwaves = 2,45 GHz , density mass of the materials p : ZrO2 = 2520 Kg/m³, Al2O3 = 1588 Kg/m³ : SiC = 965 Kg/m³, thickness of the materials d : ZrO2 = 7,5 mm., Al2O3 = 12,5 mm., SiC = 10 mm..

From the diagram it is noted that the silicon carbide shows a rapid increase of the heating temperature in a short time and, when it reaches a determined temperature (about 1000° C), it maintains itself almost at the same temperature for a long heating time, whereas on the contrary the zirconia and the alumina don't show a rapid starting increase of the temperature and, anyway, after a certain heating time, the zirconia shows a rapid increase of the temperature, that exceeds the one of the silicon carbide at the high temperatures, however such heating time is longer than that of the silicon carbide. On the contrary, the alumina shows only a reduced increase of the temperature during the heating time, since this material has a low absorption of the microwaves, being it a refractory material. From the comparison of the measured values, it has been observed how the silicon carbide must be considered the more suitable material for being used as acceptor material, for the greater capacity to absorb the microwaves and, therefore, for the quicker increase of its temperature. Consequently, the lengthened tubes 25 of the present device are preferably made of this latter kind of material, but this doesn't exclude that also the zirconia might be used for the same aim. Such a silicon carbide, which is a ceramic material that behaves almost like a diamond, has also the following advantageous characteristics: low density, high hardness, high modulus of elasticity, high thermal conductivity, low linear expansion coefficient, maximum operating temperature in to inert gas of 1800° C, excellent withstand to thermal shocks, resistance to corrosion and wear also to high temperatures, toxicologically safe, good sliding properties, extreme resistance to acids and bases.

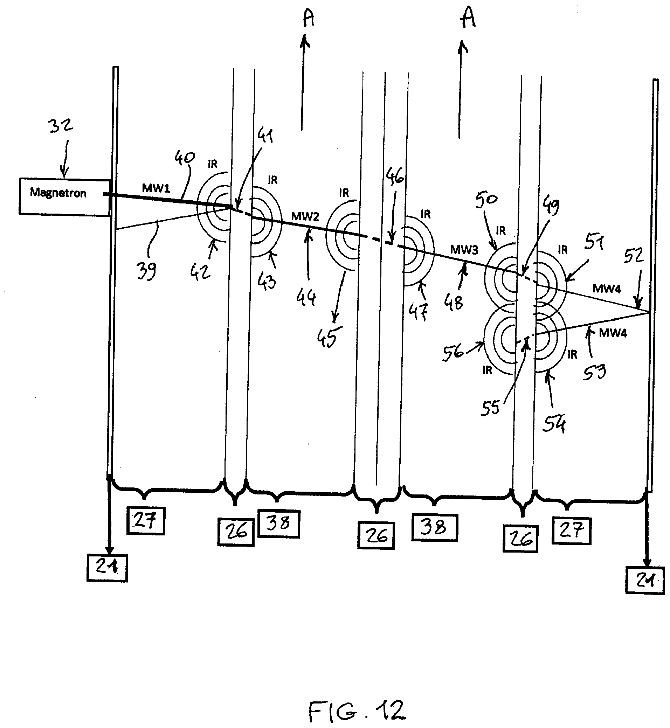

Now, referring to Fig. 12, it is shown a longitudinally cutaway and enlarged view of a part of the inner chamber 19 of the heating module 5, delimited by the peripheral upright wall 21, with the internal component parts thereof comprising the internal insulating material 27, and two lengthened tubes 25 with the peripheral wall 26, of which the walls 26 of two tubes are into contact to each other, and wherein the internal cavity crossed by the smokes of each tube is marked with 38. In this view, it is also shown the internal path of a microwave generated by the magnetron 32 and passing in sequence through the internal insulating material 27, the peripheral wall 26 of the first tube 25, the internal cavity 38 of the first tube 25, the two peripheral walls 26 into contact to each other of the first and the second tube 25, the internal cavity 38 of the second tube 25, and the internal insulating material 27, which microwave is then reflected by the metallic material of the subsequent peripheral upright wall 26, along a path 39 to ward the upright wall 21. This graph serves to explain the physical effects that are determined along the microwave path, and that involves a consistent abatement of the pollutant substances of the smokes circulating through the lengthened tubes 25. As visible from the left to the right side, the microwave passes at first directly through the internal insulating material 27 along a first path 40, then it comes into contact with the external surface of the peripheral wall 26 of the first tube 25, and in this position a first part of the microwave is reflected by such a wall 26 toward the insulating material 27. A second part of this microwave passes through the peripheral wall 26 of the first lengthened tube 25, along a path marked 41, and is absorbed by the acceptor material (in the example referred to, the silicon carbide) of the above tube by generating an infrared radiation 42 (therefore a heating) into the internal insulating material 27, that is inhibited by the same material, by restricting the heat on the external wall 26, and an infrared radiation 43 (therefore a heating) that is irradiated into the internal cavity 38 of the same tube. Under this circumstance, the hot smokes circulating through the internal cavity 38 of this tube and directed toward the exhaust, in the ascending direction A, are further heated by such an infrared radiation, by increasing their temperature. A third part of this microwave is transmitted by the acceptor material of the first lengthened tube 25, because of its semi-transparent capacity, and comes out from the internal surface of the peripheral wall 26 of the tube 25, by passing directly through the internal cavity 38 of said tube, along a second path 44, by arriving into contact with the internal surface of the other portion of peripheral wall 26 of the same tube, and in this position a first part of the microwave is reflected by such a wall 26 toward the previous wall, and from this latter is reflected again toward the internal surface of the other portion of peripheral wall 26, thereby determining multiple reflections of the microwave between these two internal walls. In turn, a second part of the microwave is, like previously, absorbed by the acceptor material of this tube, by generating an infrared radiation (therefore a heating) that is irradiated in part through this portion of peripheral wall 26 and in part (marked with 45) into the internal cavity of the same tube. Also in this case, therefore, the circulating hot smokes are further heated by this additional infrared radiation, by increasing further on their temperature, while the microwave energy still decreases. By prosecuting to describe the path of the microwave referred to, it is noted that it passes through both the peripheral wall 26 of this first tube and through the peripheral wall 26 of the second tube, which walls are into close contact to each other, and the path of the microwave through the two peripheral walls into contact to each other is marked with 46. Consequently, the passage of the microwave through the second tube determines the same above described effects that are determined into the first tube 25, namely an infrared radiation irradiated in part through the peripheral wall 26 of the second tube 25, and in part (marked with 47) through the internal cavity 38 of the second tube 25, thereafter the microwave passes directly through the internal cavity 38 of said second tube, along a third path 48, and a first part of the microwave is reflected by the other portion of wall 26 of the second tube toward the previous peripheral wall 26, with consequent multiple reflections of such a part of microwave between the internal walls of the second tube. So, also in this case a second part of the microwave is absorbed by the acceptor material of the tube, along the path 49, by generating an infrared radiation (marked with 50) that is irradiated into the internal cavity 38 of said second tube. As a consequence, an additional heating of hot smokes is still determined into the second tube 25 by the so generated infrared radiation. By prosecuting its progress on to the path 49 through the other portion of wall 26 of the second tube 25, as explained, the microwave is absorbed by the acceptor material by generating also an infrared radiation marked with 51 (therefore a heating), that is irradiated toward the subsequent insulating material 27, where such an infrared radiation is inhibited by the same material, by restricting the heat on the external wall 26. Finally, a third part of microwave is transmitted and prosecutes along the path 52, defined by the thickness of the insulating material 27, and is directed against the metallic material of the peripheral upright wall 21 of the internal container 20, where the microwave is reflected toward the portion of wall 26 of the second tube, along an additional path 53, by passing through the insulating material 27. When the microwave comes into contact with the portion of wall 26 of the second tube, it is absorbed again by the acceptor material of the same wall, by generating also here an infrared radiation, that is irradiated in part (marked with 54) toward the insulating material 27, where such an infrared radiation is inhibited by the same material, by restricting the heat on the external wall 26. Finally, the microwave still passes through said portion of wall 26, along the path 55, being partially absorbed by it, by generating also here an infrared radiation, that is irradiated in part (marked with 56) through the internal cavity 38 of the second tube 25, thereby producing an additional heating of the smokes circulating through the internal cavity. In this manner, by passing as described through all the cited component parts of the inner chamber 19, the microwave energy gradually decreases and determines, at the one hand a considerable increase of temperature of the smokes circulating through both tubes 25 and at the other hand it determines, because of the repeated reflections of the same microwave through the internal cavities 38 of the relative tubes and its contact with the high temperatures, with the different unhomogeneities and densities of the gases contained into the circulating smokes, some energy the peaks of the microwaves (so-called hot spots) that aren't distributed in an orderly and homogenous manner into these internal cavities, but are surprisingly distributed randomly and in variable and different positions into the same internal cavities. As a consequence, by dimensioning opportunely both the characteristics (power, intensity, frequency, etc.) of the microwaves, that are directed into the internal cavity 19, and the size and the quality of the acceptor material of the tubes, it is possible that the so generated and randomly distributed hot spots into the above internal cavities might attain very high temperatures, also in the range comprised between about 1200° C and about 2600° C, that are sufficient to provide for heating the circulating smokes at these very high temperatures, and to dissociate the molecules of the different compounds constituting the pollutant substances of the smokes, in order to let coming out from the present heating module 5 the smokes containing a high percentage of single not-pollutant component substances, that may therefore be discharged subsequently in the environment by reducing considerably the pollution thereof.

In the above description of the path of a microwave through the internal cavity 19 of the heating moduie 5, reference has been made to one microwave only, but such a description of course refers also to all the microwaves generated by the magnetron 32 passing through the above described two lengthened tubes 25, as in fact it occurs in the practice. Furthermore, the microwaves generated by one or more magnetron 32 arranged as visible in the Figures, are directed also through any other lengthened tube secured into the inner chamber 19, in the present example in the third provided tube and visible in the Fig. 4, which pass through the relative tubes along analogous paths, for obtaining the abatement of the smokes circulating through the correspondent tubes with the same above described effects.

There are now described some examples of smokes that may be produced with some types of combustibles with excess of air, as it normally happens in the practice, which smokes may contain, in addition to the same excess of air, some pollutant substances to be abated with the device and the process of the present invention.
- Methane (gaseous fuel) :
   Into the smoke there are present H2O (in the form of steam or atomized), CO2, O2, N2, nitrogen oxides (NOx, where 'x' is used for identify in a generic way all the nitrogen oxides, therefore it indicates the different number that may be present of atoms of nitrogen bound in various manner to atoms of oxygen) and particulates.
- Combustible oil or diesel (liquid fuels):
   Into the smoke there are present H2O (in the form of steam or atomized), CO2, O2, N2, nitrogen oxides (NOx), sulphur oxides (Sox, such initials identify the family of sulphur oxides, SO, S2O2, SO2 ; they depend on the contents of sulphur into the fuel) and particulates.
- Biomasses (solid fuel):
   Into the smoke there are present H2O (in the form of steam or atomized), CO2, CO, O2, N2, nitrogen oxides (NOx), sulphur oxides (Sox) and particulates.

Fundamentally, the biomass produces particulates because the physical characteristics of a piece of wood or of a single pellet are such as to make the combustion more difficult than the one cf the other traditional fuels (liquids like diesel or gaseous like methane gas). By simplifying a process that is rather complex, a difficult combustion determines the presence of a high number of unburnt carbon particles, to which there are added all the volatile components being released during the various combustion steps and that, by condensing around solid micro particles, increase further the particulates mass.

Even the liquid and gaseous fuels may produce, therefore, particulates or CO, this will depend by the type of fuel, by the technology and the mode of managing the plant.

Temperatures of the smokes:
The temperature of the smokes depends on the plant capacities. Approximately, for a medium sized plant, the temperatures of the smokes for the various fuels are:
- methane gas: 100°C-150°C :
- combustible oil: 200°C-250°C :
- diesel: 160°C-220°C ;
- wood/pellet fuel: 250°C-300°C .

By referring to the Fig. 1 again, it is noted that the flue 7 is shaped large and long for housing the heating module 5 and the module 6 for partial recovering of smokes connected to each other, arranged in vertical position and secured opportunely into the inner chamber 57 of the flue 7. Such a flue 7 is shaped with a closed and inclined circular lower wall, having inclinations 58 and 59 which are symmetrical to each other, the lower part of which is joined to the conduit 9 of the combustion chamber 8, and the upper part of which is joined to the cylindrical outer wall 60 of the flue 7. The upper part of the flue 7 is also shaped with an inclined circular upper wall, having inclinations 61 and 62 symmetrical to each other and opposite to those of the lower wall, and in the upper wall it is provided the outlet 63 of the flue 7, from which the smokes purified at a large extent from the pollutant substances into the heating module 5 are coming out, which smokes pass also through the module 6 for partial recovering of the same smokes, and circulate upward in the direction A. Such smokes are produced, as already described, into the combustion chamber 8 and, by passing through the conduit 9, are conveyed in the interior of the heating module 5 through an inclined opened circular wall, having inclinations 64 and 65 symmetrical to each other, which wall is joined on its upper part to a portion of conduit 66 of cylindrical shape, the upper part of which is shaped for being screwed on and secured to the correspondent joining flange 14 of the inlet of the heating module 5.

The heating module 5 has a natural draught, therefore in this case it is obtained a self-regulating system. If the module 5 doesn't operate, the smokes pass without being treated both in the interior and outside the same module. If the module 5 is operating, a natural draught will take place, that will let to pass only the smokes that can be treated, without producing obstructions in the flue 7.

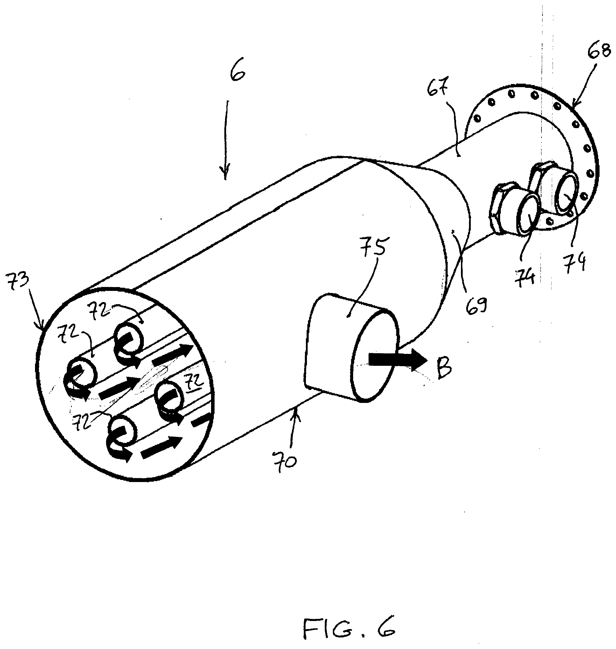

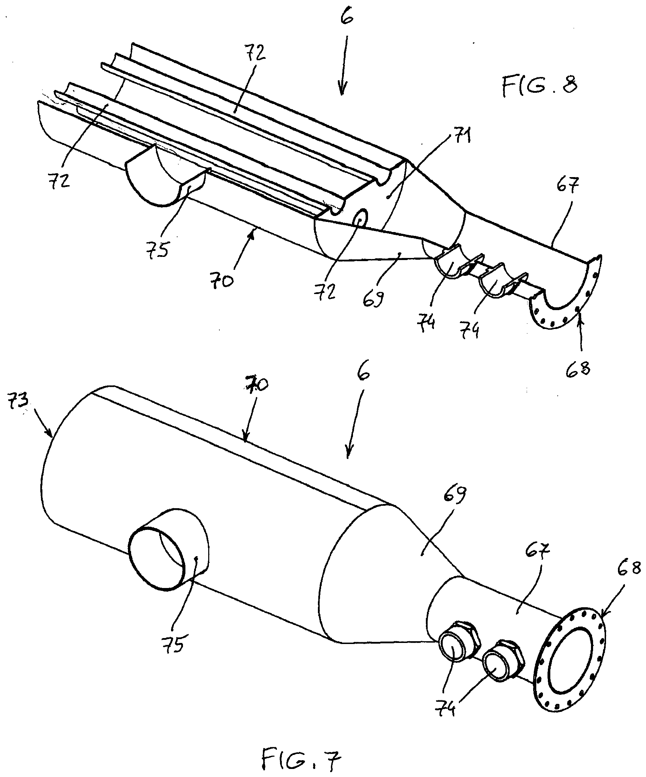

Finally, as visible in the Fig. 1, and in detail in the Figs. 6, 7 and 8, the module 6 for partial recovering of the smokes is substantially constituted by a short cylindrical conduit 67, to the free end portion of which it is fixed a tight flat circular flange 68, shaped for being screwed on and secured to the correspondent flat joining flange 18 of the heating module 5, in a manner to join the two above described modules 5 and 6, and to allow the passage of the smokes coming out from the heating module 5 toward the internal cavity of the such cylindrical conduit 67. In turn, the other end portion of the conduit 67 is joined to a correspondent end portion of an internally hollow short frusto-conical portion 69, which is enlarged gradually in the longitudinal direction of the module 6, up to its other end portion with the maximum width, that is joined with one end portion of a lengthened cylindrical conduit 70, enclosing a correspondent lengthened central body 7: secured to its interior, which is shaped preferably with a cylindrical shape and is provided with a set of horizontal through tubes 72 separated to each other and provided through the central body 71 and in the longitudinal direction of the same, suitable for the passage of the smokes, such tube being extended for the entire length of the lengthened conduit 70 and the central body 71, up to the opened end portion 73 of this latter, which is situated in an approached position and correspondent to the one of the outlet 63 of the flue 7, for discharging the smokes. The smokes arriving from the heating module 5, into which they are depurated with large extent from the pollutant substances, are iet to circulate through such internal tubes 72, of which an end portion is communicating with the internal cavities of the cylindrical conduit 67 and the frusto-conical portion 69, in a way that the smokes circulating through such internal tubes 72 are then discharged in part through said upper outlet 63 and in part are recovered as it will be described. Along the cylindrical conduit 67 there are provided two through holes 74 approached to each other, for inserting and fixing some per se known sensors (not indicated), which are calibrated for detecting the parameters relating to the circulating smokes, and in particular the flow rate, the temperature and the composition of smokes entering the module 6 for partial recovering smokes, after having passed through the heating module 5. As flow rate sensor it may be utilized for example a measuring instrument for the differential pressure. As sensor for temperature and composition of smokes it may be utilized for example a per se known smoke analyzer of professional type. In this way, the detection of these parameters allows also to know the composition of the substances contained into the smokes regarding their single pollutant component parts, after the abatement of the smokes into the heating module 5.

All the above described sensors are electrically connected to the control central station, together with the electric and electronic components of the magnetron 32 and the other electric components pertaining to the other component parts of the present device.

Furthermore, the module 6 for partial recovering of the smokes is provided with at least a short outlet pipe union 75, joined with its one end portion to a correspondent through hole (not indicated) provided in to the lengthened conduit 70, in a manner to communicate with the inner chamber (not indicated) of the same lengthened conduit, said outlet pipe union 75 being also joined with its other end portion to an end portion of a lengthened conduit 76 for recovering the smokes, the other end portion of which is joined to the suction inlet 77 of a suction device like a fan 78, in turn jo:ned with its delivering outlet 79 to the combustion chamber 8, through a short conduit 80. In the interior of the recovering conduit 76 of the smokes it is also inserted, near the fan 78, at least a sensor 81 for measuring the oxygen level present into the smokes circulating into the smokes recovering conduit 76 in the direction B, which sensor is connected with its electric component part 82 to the control central station of the present device.

Near the suction inlet 77 of the fan 78, it is provided at least a shutter 83 or a similar device, which is installed in the interior of the smokes recirculating conduit 76 and the actuating electric part thereof (not indicated) is also connected to said control central station of the present device, said shutter being installed in a manner to intercept and let to pass always the flow of the recovered smokes circulating through the smokes recovering conduit 76, and being controlled by the central control station in a manner to be actuated from a opened position to a closed position thereof, and vice-versa, in the manner and for the functions that will be described. In a position correspondent to that one of the shutter 83, a short conduit 84 is also provided and joined with its one end portion to the smokes recovering conduit 76 and its other end portion 85 is free and communicating with the external environment, such a conduit 84 being adapted to be closed or opened by the shutter 83, for preventing or allowing the passage of the external air through the same conduit. Then, with this arrangement for recovering the smokes, the smokes passing through the internal tubes 72 of the module 6, are always partially discharged directly outside, by passing through said upper through opening 63 and are also partially recovered and let to circulate through the smokes recovering conduit 76, thanks to the suction pressure produced by actuating the fan 78 with the control of the above control central station.

Then, in the first case the abated smokes being discharged in the environment pass through the short distance existing between the two end portions of the internal tubes 72 and the outlet 63 and are quickly cooled down with the contact with the lower temperature of the external environment, thereby preventing that the abated substances contained into the discharged smokes might chemically re-combined again to each other, and forming again the abated pollutant substances. In the second case, the smokes circulating through the internal tubes 72 of the module 6 are at first deviated through the outlet pipe union 75, by passing through the inner chamber of the lengthened conduit 70, and then are conveyed through the smokes recovering conduit 76. The so recovered smokes contain a greater quantity of oxygen with respect to that one present before the treatment in the heating module 5, owing to the oxygen molecules being released during the molecular dissociations of the pollutant substances of smokes, which are resolved at a large extent in the heating module 5, therefore this condition is obtained withou: providing any dilution of the smokes. The so produced oxygen is recovered, together with the smokes, by means of suction and let to circulate through the smokes recovering conduit 76, and added to the one present in the combustion chamber 8 daring the combustion of the products therein, by adjusting the oxygen level for improving in this way the combustion in this chamber, in the manner that will be described, and by determining also a further abatement of the smokes in the subsequent heating module 5. The oxygen level contained in the so recovered smokes and let to circulate in the smokes recovering conduit 76 is measured by the sensor 81 and controlled by the control central station of the present device. Such a control central station, in particular, is provided for actuating or not actuating the shutter 83 in an opened or closed position thereof, and therefore for allowing or preventing the passage of the air through the conduit 84, depending on the oxygen level measured by the sensor 81 and contained in the recovered smokes. Such a control central station, also, is set in advance in a manner that when the so detected oxygen level be comprised within determined limits, and such as to ensure a better combustion in the combustion chamber 8, it actuates the shutter 83 into a closed position thereof, thereby preventing the passage of the air through the conduit 84. Furthermore, such a control central station is also set in advance in a manner that when the so detected oxygen level is of quantities smaller than the ones needed to ensure a better combustion into the combustion chamber 8, it actuates the shutter 83 in the opened position thereof, with a consequent suction by the fan 78 also of the external air and passage of this air through the conduit 84 and mixing it with the smokes coming from the conduit 76, therefore containing also oxygen, in the combustion chamber 8. When the oxygen level is returned within the established limits, the control central station actuates the shutter 83 in the closed position thereof.

It is now described shortly the process for treatment and abatement of liquid, gaseous and/or solid pollutant substances of various kind contained into the exhaust smokes, that is effected into the above described abatement device, wherein the device is constituted by the above component parts, for performing the above described functions.

This process is effected by using particularly the heating module 5 of the device according to the invention, formed by the above described component parts, in a manner to treat and to abate in the most possible wide extent the pollutant substances contained into the exhaust smokes deriving from the combustion processes of pollutant substances, produced by various sources. According to the present invention, the combustion of the substances is carried out into the combustion chamber 8, from which the smokes containing the pollutant substances are developed, as already described, let to pass at first through said heating module 5, and then through the module 6 for partial recovering of the present device, and under this condition the abated smokes at high percentages are then discharged in the outside environment.

The present process comprises the following steps:
- generation of microwaves by means of a magnetron 32, applied to said heating module 5, when the hot smokes containing the pollutant substances produced by the combustion are circulating in the internal cavities of one or more of said lengthened tubes 25 made of acceptor material that are internally fixed to the heating module, and are directed toward the outlet end portion of the same module;
- transmission of the microwaves generated by the magnetron 32 through the through holes 31 of the lengthened container 10 made of metallic material impermeable to microwaves, which contains said lengthened tubes 25 enclosed by said insulating material 27, said microwaves by passing in sequence at first through said insulating material 27 and then through all the peripheral walls 26 and the internal cavities 38 of the lengthened tubes 25, the acceptor material of which generates infrared radiations that are irradiated into the internal cavity of the same tube, by determining a further heating of the circulating hot smokes, and a simultaneous multiple reflection of the microwaves into the internal cavities delimited between the peripheral walls 26 of each tube 25;
- generation, because of the multiple reflections of the microwaves between the peripheral wall of each tube and the contact of the microwaves with high temperatures, and the different unhomogeneities and densities of the gases contained into the circulating smokes, some energy peaks of the microwaves (so-called hot spots) that are surprisingly distributed randomly and in to variable and different positions into the internal cavities of all tubes, in such a way that, by dimensioning opportunely both the characteristics (power, intensity, frequency, etc.) of the microwaves passing through said inner chamber 19, and the size and the quality of the acceptor material of the lengthened tubes 25, the so generated hot spots distributed randomly might attain very high temperatures, also in the range comprised between about 1200° C and about 2600° C, for heating the smokes at these very high temperatures, thereby dissociating the molecules of the different compounds constituting the pollutant substances of the smokes, with consequent discharge in to the atmosphere of smokes with a high percentage of single not pollutant component substances.

## Claims

1. Device for abatement of liquid, gaseous and/or solid pollutant substances of various kind, produced by various sources, and contained into the exhaust smokes deriving from the combustion processes of substances of various kind, the combustion of the substances occurring into at least a combustion chamber (8) communicating with the inlet of at least one flue (7), from the outlet (63) of which the smokes, abated at a high percentage, from the pollutant substances are coming out, **characterized by** comprising at least a heating module (5), for the circulation and the abatement at a large extent of said pollutant substances contained into the exhaust smokes; and
at least a module (6) for recovering the smokes communicating with said heating module (5) and contained together with this latter into said flue (7), as well as adapted to let to pass part of the abated smokes to be discharged outside and to recover part of the same smokes, for bringing them back to said combustion chamber (8) in a manner to improve the combustion of the same products therein,
said heating module (5) being communicating with its end portions respectively with said combustion chamber (8) and the inlet of said smokes recovering module (6), and said recovering module (6) being communicating with its outlet with said outlet (63) of the smokes, said heating module (5) comprising an outer envelope (11) which is made of a metallic material, impermeable to the microwaves, into which there is inserted and fixed, with the interposition of insulating material (24) such as for example the mineral wool, at least a lengthened internal container (20) made of mechanically withstanding metallic material and impermeable to the microwaves, shaped with a peripheral wall (21) joined at its end portions by lower (22) and upper (23) joining means constituted of material with the same characteristics, delimiting at least an inner chamber (19), in the interior of said lengthened container (20) there being housed and secured one or more lengthened tubes (25) crossed through their inner cavities by the smokes, circulating preferably by natural draught,
said lengthened tubes (25) being made of acceptor material, preferably silicon carbide or zirconia, with such characteristics as to partly reflect, to partly absorb and to partly allow passage and to allow the passage (semi-transparent capacity) of the energy flow of the microwaves arriving on to the surface of said lengthened tubes (25), said lengthened tubes (25) being externally covered for almost the whole extension thereof by insulating material (27) suitable to withstand to temperatures comprised between -50°C and 3000°C, and with characteristics of radio-transparency to the frequencies comprised between 0,2 GHz and 5 GHz, therefore to the microwaves frequencies, and the surfaces of the lower and upper end portions of such an internal insulating material (27) being covered by respective covering means (28, 29) of the same insulating material, which are secured on to the same surfaces, and are bored for permitting the passage of smokes and are communicating with said combustion chamber (8) and the outlet (63) of said flue (7), respectively,
said heating module (5) being also provided with a plurality of through openings (31) provided through said outer envelope (11) and said vertical peripheral wall (21), in positions coinciding to each other, and communicating with at least a relative microwave generator (32) (magnetron), through correspondent waveguides (33) connected sealingly between said microwave generator (32) and said through openings (31), in such a way that the microwaves generated by the generator (32) be distributed and directed toward said vertical tubes (25), by passing through said insulating materials (24, 27), said microwave generator (32) being adjustable in such a way as to generate microwaves with a power comprised between 200 W and 20000 W, which microwaves decrease their energy by passing at first through internal insulating material (27), and then by passing through said lengthened tubes (25) they generate some infrared radiations that irradiate themselves into the relative internal cavities (38) of said lengthened tubes (25), by determining a further heating of the circulating smokes, and a simultaneous multiple reflection of the microwaves into said internal cavities (38), in such a way that, because of the multiple reflections of the microwaves into said internal cavities (38) and of their contact with the high temperatures, with the different unhomogeneities and densities of the gases contained into the circulating smokes, there are generated into said internal cavities (38) some energy peaks of the microwaves that aren't distributed in an orderly and homogenous manner into the same internal cavities, but are surprisingly distributed randomly and in variable and different positions into the same internal cavities, in such a way that by dimensioning opportunely both the characteristics of the microwaves being directed into said internal cavity (19), and the size and the quality of the acceptor material of the tubes (25), the so generated energy peaks distributed randomly into the above internal cavities might attain very high temperatures, in the range comprised between about 1200° C and about 2600° C, that are sufficient to determine the heating of the smokes circulating at these very high temperatures, and to dissociate the molecules of the different compounds constituting the pollutant substances of the smokes, in order to discharge in the environment the smokes that contain a high percentage of single not-pollutant component substances, by reducing considerably the pollution of the same, which smokes during the contact with the lower room temperatures might therefore not be re-combined to each other for forming again the pollutant substances;
and wherein said module (6) for recovering of the smokes is provided with a plurality of internal conduits (72) for the circulation of the smokes, communicating with the outlet of said heating module (5) and said outlet of flue (63) for discharging the smokes, said smokes recovering module (6) being also communicating through a conduit (76) for recovering the smokes and fan means (78) with said combustion chamber (8), for determining the circulation of the smokes containing oxygen through said conduit (76) for recovering the smokes, which is sucked by said smokes recovering module (6) by means of said fan means (78), in a way to supply with the oxygen the combustion in the same combustion chamber (8), that so may be improved, said smokes recovering conduit (76) containing also sensor means (81) for measuring the level of the oxygen circulating into said smokes recovering conduit (76), and flow deviation means (83) communicating or not communicating with an air conduit (84), and actuatable depending on the oxygen level measured by said sensor means (81), from a closing position to an opened position of said air conduit (84), respectively when the measured oxygen level is sufficient for improving the combustion, and on the contrary when said oxygen level is lower than the desired one and insufficient for improving the combustion, in such a case by supplying the combustion chamber (8) with additional oxygen, sucked from the outside through said air conduit (84).

2. Device according to claim 1, **characterized in that** said metallic outer envelope (11) is closed at its lower end portion by a flat closing disc (12) preferably of circular shape, which is also made of mechanically withstanding metallic material and impermeable to the microwaves, which may be of the same type of material of the outer envelope (11), said disc (12) being joined sealingly with a short vertical cylindrical sleeve (13) directed downward, also of metallic material having the same characteristics of the preceding metallic materials, which is communicating with said inner chamber (19), said vertical sleeve (13) being welded at its lower end portion with a flat joining flange (14), made of mechanically withstanding metallic material, adapted to withstand the high temperatures for the contact with the gases deriving from the combustion and stable at the high temperatures;
and **wherein** said outer metallic envelope (11) is also closed at its opposite end portion, from which the smokes are coming out, with a flat closing disc (16), preferably of circular shape, which is joined sealingly with a short vertical cylindrical sleeve (17) directed upward;and
**wherein** also in this case the upper closing disc (16) and the vertical sleeve (17) are made of the same material and shaped in the same manner of the correspondent elements of the lower end portion of said outer envelope (11).

3. Device according to claim 2, **characterized in that** in the interior of said internal chamber (19) there are inserted and fixed temperature detecting means, such as for example optical pyrometers, entering the chamber through correspondent through holes (30) provided through said outer envelope (11), peripheral wall (21) and insulating materials (24, 27), which are suitable to detect the inner temperature of the heating module (5), said detecting means being electrically connected, together with said microwave generator (32) and the other electric and electronic component parts of the device, with at least a control central station of the device, adapted for checking the operation of said detecting means and said electric and electronic component parts.

4. Device according to the previous claims, **characterized in that** said flue (7) is shaped for being able to house said heating module (5) and module (6) for partial recovering of smokes connected to each other and arranged in a vertical position, and secured into the inner chamber (57) of the flue (7), said flue (7) being shaped with a closed and inclined circular lower wall, having inclinations (58, 59) symmetrical to each other, the lower part of which is joined to the conduit (9) of the combustion chamber (8), and the upper part of which is joined to the cylindrical outer wall (60) of the flue (7);
wherein
the upper part of the flue (7) is also shaped with an inclined circular upper wall, having inclinations (61, 62) symmetrical to each other and opposite to those of the lower wall, and in the upper wall it is also provided the outlet (63) of the flue (7), from which the smokes purified from the pollutant substances are coming out, which smokes pass also through said module (6) for partial recovering of the smokes, and circulate upward in the direction A, and are conveyed in the interior of the heating module (5) through an inclined and opened circular wall, having inclinations (64, 65) symmetrical to each other, which wall is joined on its upper part to a portion of conduit (66) of cylindrical shape, the upper part of which is shaped for being screwed on and secured to the correspondent said joining flange (14) of the inlet of the heating module (5), said heating module (5) having a natural draught.

5. Device according to the previous claims, **characterized in that** said module (6) for partial recovering of the smokes is substantially constituted by a cylindrical conduit (67), to the free end portion of which a narrow flat circular flange (68) is fixed, which shaped for being screwed on and secured to the correspondent flat joining flange (18) of the heating module (5), in a manner to join the said two modules (5 and 6), and to allow the passage of the smokes coming out from the heating module (5) toward the internal cavity of the same cylindrical conduit (67); wherein the other end portion of said conduit (67) is joined to a correspondent end portion of an internally hollow frusto conical portion (69), which is enlarged gradually in the longitudinal direction of the module (6), up to its other end portion with the maximum width, that is joined with one end portion of a lengthened cylindrical conduit (70), enclosing a correspondent lightened central body (71) secured in its interior, which is shaped preferably with a cylindrical shape and is provided with a set of horizontal through tubes (72) separated to each other and provided through the central body (71) and in the longitudinal direction thereof, provided for the passage of the smokes, such tubes (72) being extended for the entire length of the lengthened conduit (70) and the central body (71), up to the opened end portion (73) of this latter, which is situated in an approached position and correspondent to the one of the outlet (63) of said flue (7);
wherein the purified hot smokes arriving from the heating module (5) are let to circulate through said internal tubes (72), an end portion of which is communicating with the internal cavities of the cylindrical conduit (67) and the frusto conical portion (69), in a way that the smokes circulating through such internal tubes (72) are then discharged in part through said upper outlet (63) and in part are recovered by circulating through said recovering conduit (76), which is joined to one end portion of the outlet union pipe (75), the other end portion of which is joined to a through hole provided into said lengthened conduit (70);
wherein along said cylindrical conduit (67) there are provided some through holes (74) approached to each other, for the insertion and the fixing of some measuring sensor means, which are calibrated for detecting the parameters relating to the circulating smokes, and in particular the flow rate, the temperature and the composition of smokes entering the module (6) for partial recovering the smokes, after having passed through the heating module (5), wherein as flow rate sensor means it may be utilized for example a measuring instrument for the differential pressure, and as sensor means for temperature and composition of smokes it may be utilized for example a per se known smoke analyzer of professional type, in a way that the detection of these parameters also allows to know the composition of the substances contained into the smokes relating their single component parts, after the abatement of the smokes into the heating module (5), all said measuring sensor means being electrically connected to the control central station of the present device, together with the electric and electronic components of the magnetron (32) and being controlled by the same control central station.

6. Process for abatement of liquid, gaseous and/or solid pollutant substances of various kind, produced by various sources and contained into the exhaust smokes deriving from the combustion processes of substances of various kinds, the process being conducted in a device of any of claims 1 to 5, wherein the process comprises the following steps:
- generation of microwaves by means of a magnetron (32), applied to said heating module (5), when the hot smokes containing the emitted pollutant substances are circulating into the internal cavities of one or more of said lengthened tubes (25) made of acceptor material and are directed toward the outlet end portion of the same module;
- transmission of the microwaves generated by the magnetron (32) through some through holes (31) of said lengthened container (10), which microwaves are passing in sequence at first through said insulating material (27) and then through all the peripheral walls (26) and the internal cavities (38) of the lengthened tubes (25), the acceptor material of which generates infrared radiations that irradiate themselves into the internal cavity of the same tube, by determining a further heating of the circulating hot smokes, and a simultaneous multiple reflection of the microwaves into the internal cavities delimited between the peripheral walls (26) of each lengthened tube (25);
- generation, because of the multiple reflections of the microwaves between the peripheral walls of each tube (25), the contact of the microwaves with the high temperatures, the different unhomogeneities and densities of the gases contained into the circulating smokes, of some energy peaks of the microwaves that are surprisingly distributed randomly and in to variable and different positions into the internal cavities (38) of all tubes (25), in such a way that, by dimensioning opportunely both the characteristics of the microwaves passing through said internal chamber (19), and the size and the quality of the acceptor material of the lengthened tubes (25), the so generated energy peaks distributed randomly might attain very high temperatures, in the range comprised between about 1200° C and about 2600° C, for heating the smokes at these very high temperatures, thereby dissociating the molecules of the different compounds constituting the pollutant substances of the smokes, with consequent discharge in to the atmosphere of smokes with a high percentage of single not pollutant component substances.

7. Process for abatement of liquid, gaseous and/or solid pollutant substances of various kind according to claim 6, **characterized in that** the abated smokes circulating through said module (6) for partial recovering of the smokes and discharged in part to the outer environment are brought directly into contact with the lower temperature in the module (6), by cooling them down rapidly and so preventing that the abated substances contained into the discharged smokes might chemically be re-combined again to each other, and forming again the abated pollutant substances;
and wherein the smokes recovered in part by passing through said module (6) for partial recovering of the smokes and containing a greater percentage of oxygen, produced by the molecular dissociations in the interior of the heating module (5), are sucked and let to circulate through said smokes recovering conduit (76), and finally are brought again into said combustion chamber (8), by supplying this latter with the additional oxygen of the same smokes, for improving the combustion into the same combustion chamber.

## Patentansprüche

1. Vorrichtung zur Beseitigung von flüssigen, gasförmigen und/oder festen Schadstoffen verschiedener Art,
die von verschiedenen Quellen erzeugt werden und in den Abgasen enthalten sind, die aus den Verbrennungsprozessen von Stoffen verschiedener Art stammen, wobei die Verbrennung der Substanzen in mindestens einer Verbrennungskammer (8) erfolgt, die mit dem Eingang von mindestens einem Rauchkanal (7) in Verbindung steht, aus dessen Ausgang (63) die zu einem hohen Prozentsatz von den Schadstoffsubstanzen befreiten Rauchgase austreten,
**gekennzeichnet durch**
wenigstens ein Heizmodul (5) für die Zirkulation und die Beseitigung der in den Abgasen enthaltenen Schadstoffsubstanzen in großem Umfang; und
wenigstens ein Modul (6) zur Rückgewinnung der Abgase, das mit dem Heizmodul (5) in Verbindung steht und zusammen mit diesem in dem Rauchfang (7) enthalten ist und geeignet ist, einen Teil der beseitigten Rauchgase nach außen abzuführen und einen Teil derselben Rauchgase zurück zu gewinnen, um einen Teil der Rauchgase zu der Verbrennungskammer (8) zurück zu holen, um die Verbrennung derselben Produkte darin zu verbessern, wobei das Heizmodul (5) mit seinen Endabschnitten jeweils mit der Verbrennungskammer (8) und dem Einlass des Rauchrückgewinnungsmoduls (6) in Verbindung steht, und das Rückgewinnungsmodul (6) mit seinem Auslass mit dem Auslass (63) des Rauchs in Verbindung steht, wobei das Heizmodul (5) eine äußere Umhüllung (11) umfasst, die aus einem metallischen Material besteht, das für Mikrowellen undurchlässig ist, in die unter Zwischenlage eines Isoliermaterials (24), wie z.B. Mineralwolle, mindestens ein länglicher innerer Behälter (20) eingesetzt und befestigt ist, der aus einem mechanisch widerstandsfähigen metallischen Material besteht und für Mikrowellen undurchlässig ist, und der mit einer Umfangsfläche (21) versehen ist, die an ihren Endabschnitten durch untere (22) und obere (23) Verbindungsmittel verbunden ist, die aus einem Material mit denselben Eigenschaften bestehen, und die mindestens eine innere Kammer (19) begrenzt, wobei im Inneren des länglichen Behälters (20) ein oder mehrere lange Rohre (25) untergebracht und befestigt sind, deren innere Hohlräume von den Rauchgasen durchquert werden, die vorzugsweise durch natürlichen Zug zirkulieren, und die langen Rohre (25) aus Akzeptor-Material, vorzugsweise Siliziumkarbid oder Zirkoniumdioxid bestehen, mit solchen Eigenschaften, dass sie teilweise reflektieren, teilweise absorbieren und teilweise den Durchgang (halbtransparente Kapazität) des Energieflusses der auf der Oberfläche der länglichen Rohre (25) ankommenden Mikrowellen ermöglichen, wobei die langen Rohre (25) außen über fast ihre gesamte Ausdehnung mit einem Isoliermaterial (27) bedeckt sind, das geeignet ist, Temperaturen zwischen -50°C und 3.000°C zu widerstehen, mit Eigenschaften der Radio-Transparenz für Frequenzen zwischen 0,2 GHz und 5 GHz, also für Mikrowellenfrequenzen, und die Oberflächen der unteren und oberen Endabschnitte eines solchen inneren Isoliermaterials (27) mit entsprechenden Abdeckmitteln (28, 29) aus demselben Isoliermaterial bedeckt sind, die an denselben Oberflächen befestigt sind und gebohrt sind, um den Durchgang von Rauch zu ermöglichen und mit der Brennkammer (8) bzw. dem Auslass (63) des Rauchfangs (7) in Verbindung stehen,
wobei das Heizmodul (5) auch mit einer Vielzahl von Durchgangsöffnungen (31) versehen ist, die durch die äußere Umhüllung (11) und die vertikale Umfangswand (21) hindurch an zueinander übereinstimmenden Positionen vorgesehen sind und mit mindestens einem entsprechenden Mikrowellengenerator (32) (Magnetron) über entsprechende Wellenleiter (33) in Verbindung stehen, die abdichtend zwischen dem Mikrowellengenerator (32) und den Durchgangsöffnungen (31) verbunden sind, derart, dass die von dem Generator (32) erzeugten Mikrowellen verteilt und auf die vertikalen Rohre (25) gerichtet werden, indem sie durch die Isoliermaterialien (24, 27) hindurchgehen, wobei der Mikrowellengenerator (32) so einstellbar ist, dass er Mikrowellen mit einer Leistung zwischen 200 W und 20.000 W erzeugt, wobei die Mikrowellen ihre Energie verringern, indem sie zunächst durch das innere Isoliermaterial (2, 7) hindurchgehen und dann beim Durchgang durch die langen Rohre (25) einige infrarote Strahlungen erzeugen, die in die entsprechenden inneren Hohlräume (38) der verlängerten Rohre (25) einstrahlen, indem sie eine weitere Erwärmung der zirkulierenden Rauchgase und eine gleichzeitige Mehrfachreflexion der Mikrowellen in die inneren Hohlräume (38) bewirken, und zwar so, dass aufgrund der Mehrfachreflexion der Mikrowellen in die inneren Hohlräume (38) und ihre Kontakte mit den hohen Temperaturen, mit den unterschiedlichen Inhomogenitäten und Dichten der in den zirkulierenden Rauchgasen enthaltenen Gase, in den inneren Hohlräumen (38) einige Energiespitzen der Mikrowellen erzeugt werden, die nicht in einer geordneten und homogenen Weise in die gleichen inneren Hohlräume verteilt sind, sondern überraschenderweise zufällig und in variablen und unterschiedlichen Positionen in die gleichen inneren Hohlräume verteilt sind, so dass durch eine geeignete Dimensionierung sowohl die Eigenschaften der in die inneren Hohlräume (19) gerichteten Mikrowellen, die Größe und die Qualität des Akzeptormaterials der Röhren (25), die so erzeugten Energiespitzen zufällig in den oben genannten inneren Hohlraum (19) verteilt werden,
wobei die so erzeugten Energiespitzen, die willkürlich in den oben genannten inneren Hohlräumen verteilt werden, sehr hohe Temperaturen erreichen können, im Bereich zwischen etwa 1200 °C und etwa 2600 °C, die ausreichen, um die Erhitzung der bei diesen sehr hohen Temperaturen zirkulierenden Rauchgase zu bewirken und die Moleküle der verschiedenen Verbindungen, die die Schadstoffe der Rauchgase bilden, zu dissoziieren, und in die Umwelt zu entlassen, die einen hohen Prozentsatz der einzelnen, nicht schadstoffhaltigen Bestandteile enthalten, indem die Verschmutzung derselben erheblich reduziert wird, welche Rauchgase während des Kontakts mit den niedrigeren Raumtemperaturen daher nicht wieder miteinander verbunden werden, um erneut die Schadstoff-Substanzen zu bilden; und wobei das Modul (6) zur Rückgewinnung der Rauchgase mit einer Vielzahl von inneren Leitungen (72), die mit dem Auslass des Heizmoduls (5) und dem Auslass des Kamins (63) zum Abführen der Rauchgase in Verbindung steht, wobei das Modul (6) zur Rückgewinnung der Rauchgase auch über eine Leitung (76) zur Rückgewinnung der Rauchgase und eine Gebläseeinrichtung (78) mit der Verbrennungskammer (8) in Verbindung steht, um die Zirkulation der Rauchgase, die Sauerstoff enthalten, durch die Leitung (76) zur Rückgewinnung der Rauchgase zu bestimmen, der von dem Modul (6) zur Rückgewinnung der Rauchgase mittels des Gebläses (78) angesaugt wird, in einer Weise, um die Verbrennung in derselben Verbrennungskammer (8) mit dem Sauerstoff zu versorgen, die so verbessert werden kann, wobei die Rauchrückgewinnungsleitung (76) auch Sensormittel (1) zum Messen der Menge des Sauerstoffs enthält, der in der Rauchrück-gewinnungsleitung (76) zirkuliert und eine Strömungsumlenkungs-einrichtung (83) aufweist, die mit einer Luftleitung (4) in Verbindung steht oder nicht in Verbindung steht, in Abhängigkeit von dem durch die Sensoreinrichtung (81) gemessenen Sauerstoffpegel, von einer Schließposition in eine geöffnete Position der Luftleitung der Verbrennung ausreicht, und im Gegenteil, wenn der Sauerstoffpegel niedriger als der gewünschte und zur Verbesserung der Verbrennung unzureichend ist, wobei in einem solchen Fall die Verbrennungskammer (8) mit zusätzlichem Sauerstoff versorgt wird, der von außen durch die Luftleitung (84) angesaugt wird.

2. Vorrichtung nach Anspruch 1,
**dadurch gekennzeichnet,**
**dass** die metallische Außenhülle (11) an ihrem unteren Endabschnitt durch eine flache, vorzugsweise kreisförmige Verschlussscheibe (12) verschlossen ist, die ebenfalls aus mechanisch widerstandsfähigem, metallischem Material besteht und für die Mikrowellen undurchlässig ist, wobei die Scheibe (12) vom gleichen Materialtyp wie die Außenhülle (11) sein kann, und die Scheibe (12) abdichtend mit einer kurzen vertikalen, nach unten gerichteten zylindrischen Hülse (13) verbunden ist, ebenfalls aus metallischem Material mit den gleichen Eigenschaften der vorhergehenden metallischen Materialien, die mit der inneren Kammer (19) in Verbindung steht, wobei die vertikale Hülse (13) an ihrem unteren Endabschnitt mit einem flachen Verbindungsflansch (14) verschweißt ist, der aus mechanisch widerstandsfähigem metallischem Material hergestellt ist, das geeignet ist, den hohen Temperaturen für den Kontakt mit den aus der Verbrennung stammenden Gasen standzuhalten, und das bei den hohen Temperaturen stabil ist;
und wobei die äußere metallische Hülle (11) auch an ihrem gegenüberliegenden Endabschnitt, aus dem die Rauchgase kommen, mit einer flachen Verschlussscheibe (16), vorzugsweise von kreisförmiger Gestalt, verschlossen ist, die mit einer kurzen vertikalen zylindrischen Hülse (17), die nach oben gerichtet ist, abdichtend verbunden ist; und
wobei auch in diesem Fall die obere Verschlussscheibe (16) und die vertikale Hülse (17) aus demselben Material hergestellt und in derselben Weise geformt sind wie die entsprechenden Elemente des unteren Endabschnitts der äußeren Hülle (11).

3. Vorrichtung nach Anspruch 2,
**dadurch gekennzeichnet,**
**dass** in das Innere der inneren Kammer (19) Temperaturerfassungsmittel, wie z.B. optische Pyrometer, eingesetzt und befestigt sind, die durch entsprechende Durchgangslöcher (30), die durch die äußere Hülle (11), die Umfangswand (21) und die Isoliermaterialien (24, 27) hindurch vorgesehen sind, in die Kammer gelangen, die geeignet sind, die Innentemperatur des Heizmoduls (5) zu erfassen, wobei die Erfassungsmittel zusammen mit dem Mikrowellengenerator (32) und den anderen elektrischen und elektronischen Bauteilen der Vorrichtung elektrisch mit mindestens einer zentralen Steuerstation der Vorrichtung verbunden sind, die zur Überprüfung des Betriebs der Erfassungsmittel und der elektrischen und elektronischen Bauteile geeignet ist.

4. Vorrichtung nach den vorhergehenden Ansprüchen,
**dadurch gekennzeichnet,**
**dass** der Rauchfang (7) so geformt ist, dass er das Heizmodul (5) und das Modul (6) zur teilweisen Rückgewinnung von Rauch, die miteinander verbunden und in einer vertikalen Position angeordnet sind, aufnehmen kann und in der Innenkammer (57) des Rauchfangs (7) zu befestigen, wobei der Rauchfang (7) mit einer geschlossenen und geneigten kreisförmigen unteren Wand geformt ist, die zueinander symmetrische Neigungen (58, 59) aufweist, deren unterer Teil mit der Leitung (9) der Verbrennungskammer (8) verbunden ist, und deren oberer Teil mit der zylindrischen Außenwand (60) des Rauchfangs (7) verbunden ist;
wobei der obere Teil des Rauchfangs (7) ebenfalls geformt ist mit einer geneigten kreisförmigen oberen Wand, die zueinander symmetrische und zu denen der unteren Wand entgegengesetzte Neigungen (61, 62) aufweist, und in der oberen Wand auch der Auslass(63) des Rauchfangs (7) vorgesehen ist, aus dem die von den Schadstoffsubstanzen gereinigten Rauchgase herauskommen, die auch durch das Modul (6) zur teilweisen Rückgewinnung der Rauchgase hindurchgehen und in der Richtung A nach oben zirkulieren und in das Innere des Heizmoduls (5) durch eine geneigte und geöffnete kreisförmige Wand mit zueinander symmetrischen Neigungen (64, 65) befördert werden, wobei die Wand an ihrem oberen Teil mit einem Abschnitt einer Leitung (66) mit zylindrischer Form verbunden ist, deren oberer Teil so geformt ist, dass er auf den entsprechenden Verbindungsflansch (14) des Einlasses des Heizmoduls (5) aufgeschraubt und daran befestigt werden kann, wobei das Heizmodul (5) einen natürlichen Luftzug aufweist.

5. Vorrichtung nach den vorhergehenden Ansprüchen,
**dadurch gekennzeichnet,**
**dass** das Modul (6) zur teilweisen Rückgewinnung der Rauchgase im wesentlichen aus einer zylindrischen Leitung (67) besteht, an deren freiem Endabschnitt ein schmaler, flacher, kreisförmiger Flansch (68) befestigt ist, der so geformt ist, dass er auf den entsprechenden flachen Verbindungsflansch (18) des Heizmoduls (5) aufgeschraubt und daran befestigt werden kann, um die beiden Module (5 und 6) zu verbinden und den Durchgang der Rauchgase in Richtung des inneren Hohlraums der gleichen zylindrischen Leitung (67) zu ermöglichen;
wobei der andere Endabschnitt der Leitung (67) mit einem entsprechenden Endabschnitt eines innen hohlen kegelstumpfförmigen Abschnitts (69) verbunden ist, der sich allmählich in der Längsrichtung des Moduls (6) erweitert, bis zu seinem anderen Endabschnitt mit der maximalen Breite, der mit einem Endabschnitt eines langgestreckten zylindrischen Kanals (70) verbunden ist, der einen entsprechend langgestreckten zentralen Körper (71) umschließt, der in seinem Inneren befestigt ist, der vorzugsweise zylindrisch geformt ist und mit einem Satz horizontaler Durchgangsrohren (72) versehen ist, die voneinander getrennt sind und durch den zentralen Körper (71) und in dessen Längsrichtung verlaufen, die für den Durchgang der Rauchgase vorgesehen sind, wobei sich diese Rohre (72) über die gesamte Länge der langgestreckten Leitung (70) und des zentralen Körpers (71) bis zum geöffneten Endabschnitt (73) dieses letzteren erstrecken, der sich in einer angenäherten Position zu dem einen Auslass (63) des Rauchfangs (7) befindet;
wobei die gereinigten heißen Rauchgase, die von dem Heizmodul (5) ankommen, durch die inneren Rohre (72) zirkulieren gelassen werden, von denen ein Endabschnitt mit den inneren Hohlräumen der zylindrischen Leitung (67) und dem kegelstumpfförmigen Abschnitt (69) in Verbindung steht, in der Weise, dass die durch diese inneren Rohre (72) zirkulierenden Rauchgase dann zum Teil durch den oberen Auslass (63) abgeleitet und zum Teil durch Zirkulation durch die Rückgewinnungsleitung (76) zurückgewonnen werden, die mit einem Endabschnitt des Auslassverbindungsrohrs (75) verbunden ist, dessen anderer Endabschnitt verbunden ist mit einem Durchgangsloch in der langgestreckten Leitung (70),
wobei entlang der zylindrischen Leitung (67) einige Durchgangslöcher (74) vorgesehen sind, die einander angenähert sind zum Einsetzen und die Befestigung einiger Messsensormittel, die zum Erfassen der Parameter, die sich auf die zirkulierenden Rauchgase beziehen, und insbesondere die Durchflussrate, die Temperatur und die Zusammensetzung der Rauchgase, die in das Modul (6) zur teilweisen Rückgewinnung der Rauchgase eintreten, nachdem sie das Heizmodul (5) passiert haben, wobei als Durchflusssensormittel beispielsweise ein Messgerät als Durchflusssensor z.B. ein Messgerät für den Differenzdruck und als Sensor für die Temperatur und die Zusammensetzung des Rauches z.B. ein an sich bekannter Rauchanalysator professioneller Art verwendet werden kann, so dass die Erfassung dieser Parameter auch die Kenntnis der Zusammensetzung der in den Rauchgasen enthaltenen Substanzen in Bezug auf ihre einzelnen Bestandteile ermöglicht, nach dem Ablassen der Rauchgase in das Heizmodul (5), wobei alle Messsensormittel zusammen mit den elektrischen und elektronischen Komponenten des Magnetrons (32) elektrisch mit der Steuerzentrale der vorliegenden Vorrichtung verbunden sind und von der Steuerzentrale gesteuert werden.

6. Verfahren zur Beseitigung von flüssigen, gasförmigen und/oder festen Schadstoffen verschiedener Art, die von verschiedenen Quellen erzeugt werden und in den Abgasen enthalten sind, die aus den Verbrennungsprozessen von Substanzen verschiedener Art stammen, wobei das Verfahren in einer Vorrichtung nach einem der Ansprüche 1 bis 5 durchgeführt wird, wobei das Verfahren die folgenden Schritte umfasst:
- Erzeugung von Mikrowellen mittels eines Magnetrons (32), das an dem Heizmodul (5) angebracht ist, wenn die heißen Rauchgase, die die emittierten verunreinigenden Substanzen enthalten, in den inneren Hohlräumen eines oder mehrerer der länglichen Rohre (25) aus Akzeptormaterial zirkulieren und auf den Auslassendabschnitt des Moduls gerichtet sind;
- Übertragung der von dem Magnetron (32) erzeugten Mikrowellen durch einige Durchgangslöcher (31) des länglichen Behälters (10), wobei die Mikrowellen nacheinander zunächst durch das Isoliermaterial (27) und dann durch alle Umfangswände (26) und die inneren Hohlräume (38) der länglichen Rohre (25) hindurchgehen, deren Akzeptor-Material Infrarot-Strahlungen erzeugt, die in den inneren Hohlraum der Rohre einstrahlen, indem sie eine weitere Erwärmung der zirkulierenden heißen Rauchgase und eine gleichzeitige mehrfache Reflexion der Mikrowellen in die inneren Hohlräume hervorrufen, die zwischen den Umfangswänden (26) eines jeden länglichen Rohres (25) begrenzt sind;
- Erzeugung, aufgrund der Mehrfachreflexionen der Mikrowellen zwischen den Umfangswänden jedes Rohrs (25), des Kontakts der Mikrowellen mit den hohen Temperaturen, den unterschiedlichen Inhomogenitäten und Dichten der Gase, die in den zirkulierenden Rauchgasen enthalten sind, einiger Energiespitzen der Mikrowellen, die überraschenderweise zufällig und in variablen und unterschiedlichen Positionen in den inneren Hohlräumen (38) aller Rohre (25) verteilt sind, in einer solchen Weise, dass durch eine geeignete Dimensionierung sowohl der Eigenschaften der Mikrowellen, die durch die innere Kammer (19) hindurchgehen, als auch der Größe und der Qualität des Akzeptormaterials der länglichen Rohre (25), die so erzeugten Energiespitzen zufällig verteilt sehr hohe Temperaturen erreichen können, im Bereich zwischen etwa 1200° C und etwa 2600° C, um die Rauchgase bei diesen sehr hohen Temperaturen zu erhitzen, wodurch die Moleküle der verschiedenen Verbindungen, die die Schadstoffsubstanzen des Rauchs bilden, dissoziiert werden, mit der folgenden Abgabe von Rauchgasen mit einem hohen Prozentsatz an einzelnen nicht verunreinigenden Komponenten in die Atmosphäre.

7. Verfahren zur Beseitigung flüssiger, gasförmiger und/oder fester Schadstoffsubstanzen verschiedener Art nach Anspruch 6,
**dadurch gekennzeichnet,**
**dass** die durch das Modul (6) zirkulierenden Rauchgase zur teilweisen Rückgewinnung der Rauchgase, die teilweise an die äußere Umgebung abgegeben werden, direkt mit der niedrigeren Temperatur im Modul (6) in Kontakt gebracht werden, indem sie schnell abgekühlt werden und so verhindert wird, dass sich die in den abgegebenen Rauchgasen enthaltenen beseitigten Substanzen chemisch wieder miteinander verbinden und erneut die abgetrennten Schadstoffsubstanzen bilden können;
und wobei die Rauchgase durch Durchlaufen des Moduls (6) zur teilweise Rückgewinnung der Rauchgase zurückgewonnen werden und einen größeren Prozentsatz an Sauerstoff enthalten, der durch die molekularen Dissoziationen im Inneren des Heizmoduls (5) erzeugt wird, abgesaugt werden und durch die Rauchrückgewinnungsleitung (76) zirkuliert werden und schließlich in die Verbrennungskammer (8) gebracht werden, indem diese letztere mit dem zusätzlichen Sauerstoff der Rauchgase versorgt wird, um die Verbrennung in der Verbrennungskammer zu verbessern.

## Revendications

1. Dispositif de réduction de substances polluantes liquides, gazeuses et/ou solides de diverses sortes, produites par diverses sources, et contenues dans les fumées d'échappement issues des processus de combustion de substances de diverses sortes, la combustion des substances ayant lieu dans au moins une chambre de combustion (8) communiquant avec l'entrée d'au moins un carneau (7), par la sortie (63) duquel les fumées, exemptes en grande proportion des substances polluantes, s'échappent, **caractérisé en ce qu'**il comprend au moins un module de chauffage (5), destiné à la circulation et à la réduction en grande proportion desdites substances polluantes contenues dans les fumées d'échappement ; et
au moins un module (6) destiné à la récupération des fumées, communiquant avec ledit module de chauffage (5) et contenu ainsi que ce dernier dans ledit carneau (7), et conçu de manière à laisser passer une partie des fumées réduites, qui seront évacuées à l'extérieur, et à récupérer une partie des mêmes fumées pour les renvoyer dans ladite chambre de combustion (8) afin d'améliorer la combustion des mêmes produits qu'elles contiennent, ledit module de chauffage (5) communiquant par ses extrémités respectivement avec ladite chambre de combustion (8) et avec l'entrée dudit module de récupération de fumées (6), et ledit module de récupération (6) communiquant par sa sortie avec ladite sortie (63) de fumées, ledit module de chauffage (5) comprenant une enveloppe extérieure (11) faite d'un matériau métallique imperméable aux micro-ondes, dans laquelle est inséré et fixé, avec interposition d'un matériau isolant (24) comme la laine minérale, au moins un conteneur intérieur allongé (20) fait d'un matériau résistant mécaniquement et imperméable aux micro-ondes, formé d'une paroi périphérique (21) jointe à ses extrémités par des moyens de jonction inférieur (22) et supérieur (23) constitués d'un matériau possédant les mêmes caractéristiques, délimitant au moins une chambre intérieure (19), un ou plusieurs tubes allongés (25) traversés dans leur cavité interne par les fumées, circulant de préférence par tirage naturel, étant logés et fixés à l'intérieur dudit conteneur allongé (20), lesdits tubes allongés (25) étant faits d'un matériau accepteur, de préférence du carbure de silicium ou de la zircone, présentant des caractéristiques de nature à réfléchir partiellement, à absorber partiellement et à permettre le passage partiel (capacité semi-transparente) du flux d'énergie des micro-ondes arrivant sur la surface desdits tubes allongés (25), l'extérieur desdits tubes allongés (25) étant recouvert, sur presque toute la longueur de ceux-ci, d'un matériau isolant (27) capable de résister à des températures comprises entre -50 °C et 3 000 °C et présentant des caractéristiques de radio-transparence aux fréquences comprises entre 0,2 GHz et 5 GHz, par conséquent aux fréquences micro-ondes, et les surfaces des extrémités inférieure et supérieure d'un tel matériau isolant intérieur (27) étant recouvertes par des moyens de recouvrement respectifs (28, 29) faits du même matériau isolant, lesquels sont fixés sur les mêmes surfaces, et sont percés pour permettre le passage des fumées et communiquent avec ladite chambre de combustion (8) et la sortie (63) dudit carneau (7), respectivement, ledit module de chauffage (5) étant également pourvu d'une pluralité d'ouvertures traversantes (31) pratiquées dans ladite enveloppe extérieure (11) et ladite paroi périphérique verticale (21), à des positions coïncidant les unes avec les autres, et communiquant avec au moins un générateur de micro-ondes respectif (32) (magnétron), par l'intermédiaire de guides d'ondes (33) correspondants reliés hermétiquement entre ledit générateur de micro-ondes (32) et lesdites ouvertures traversantes (31), de sorte que les micro-ondes générées par le générateur (32) sont distribuées et dirigées vers lesdits tubes verticaux (25), en traversant lesdits matériaux isolants (24, 27), ledit générateur de micro-ondes (32) étant réglable de manière à générer des micro-ondes avec une puissance comprise entre 200 W et 20 000 W, lesquelles micro-ondes diminuent en énergie en traversant dans un premier temps le matériau isolant intérieur (27), puis, en traversant lesdits tubes allongés (25), elles génèrent des rayonnements infrarouges qui irradient dans les cavités internes respectives (38) desdits tubes allongés (25), entraînant un chauffage supplémentaire des fumées en circulation, et une réflexion multiple simultanée des micro-ondes dans lesdites cavités internes (38), de sorte que, en raison des multiples réflexions des micro-ondes dans lesdites cavités internes (38) et de leur contact avec des températures élevées, avec les différentes inhomogénéités et densités des gaz contenus dans les fumées en circulation, il est généré dans lesdites cavités internes (38) des pics d'énergie des micro-ondes qui ne sont pas distribués de manière ordonnée et homogène dans les mêmes cavités internes, mais sont étonnamment distribués de manière aléatoire et à des positions variables et différentes dans les mêmes cavités internes, de sorte qu'en dimensionnant de manière appropriée les caractéristiques des micro-ondes dirigées dans ladite cavité interne (19), ainsi qu'en adaptant la taille et la qualité du matériau accepteur des tubes (25), les pics d'énergie ainsi générés et distribués de manière aléatoire dans les cavités internes susmentionnées peuvent atteindre des températures très élevées, dans une plage comprise entre environ 1 200 °C et environ 2 600 °C, qui sont suffisantes pour entraîner le chauffage des fumées circulant à ces températures très élevées, et pour dissocier les molécules des différents composés constituant les substances polluantes des fumées, afin de rejeter dans l'environnement les fumées qui contiennent un pourcentage élevé de substances constitutives uniques non polluantes, réduisant considérablement la pollution de celles-ci, lesquelles fumées, au contact des températures ambiantes plus basses, ne peuvent donc pas se recombiner entre elles pour former à nouveau les substances polluantes ; et dans lequel ledit module (6) de récupération des fumées est pourvu d'une pluralité de conduits internes (72) permettant la circulation des fumées, communiquant avec la sortie dudit module de chauffage (5) et ladite sortie de carneau (63) afin d'évacuer les fumées, ledit module de récupération de fumées (6) communiquant également, par l'intermédiaire d'un conduit (76) de récupération des fumées et de moyens de ventilation (78), avec ladite chambre de combustion (8), afin de permettre la circulation des fumées contenant de l'oxygène dans ledit conduit (76) de récupération des fumées, qui est aspiré par ledit module de récupération de fumées (6) à l'aide desdits moyens de ventilation (78), de manière à alimenter en oxygène la combustion dans ladite chambre de combustion (8), qui peut ainsi être améliorée, ledit conduit de récupération de fumées (76) contenant également des moyens de détection (81) pour mesurer le niveau d'oxygène circulant dans ledit conduit de récupération de fumées (76), et des moyens de déviation d'écoulement (83) communiquant ou non avec un conduit d'air (84), et actionnables en fonction du niveau d'oxygène mesuré par lesdits moyens de détection (81), d'une position fermée à une position ouverte dudit conduit d'air (84), respectivement lorsque le niveau d'oxygène mesuré est suffisant pour améliorer la combustion, et au contraire lorsque ledit niveau d'oxygène est inférieur au niveau souhaité et insuffisant pour améliorer la combustion, dans ce cas en alimentant la chambre de combustion (8) avec de l'oxygène supplémentaire, aspiré de l'extérieur par ledit conduit d'air (84).

2. Dispositif selon la revendication 1, **caractérisé en ce que** ladite enveloppe extérieure métallique (11) est fermée à son extrémité inférieure par un disque de fermeture plat (12), de préférence de forme circulaire, qui est également fait d'un matériau métallique résistant mécaniquement et imperméable aux micro-ondes, qui peut être du même type que le matériau de l'enveloppe extérieure (11), ledit disque (12) étant joint hermétiquement à un court manchon cylindrique vertical (13) dirigé vers le bas, également fait d'un matériau métallique ayant les mêmes caractéristiques que les matériaux métalliques précédents, qui communique avec ladite chambre intérieure (19), ledit manchon vertical (13) étant soudé au niveau de son extrémité inférieure à une bride de jonction plate (14), faite d'un matériau métallique résistant mécaniquement, conçu pour résister à des températures élevées au contact des gaz issus de la combustion et stable à des températures élevées ; et **dans lequel** ladite enveloppe métallique extérieure (11) est également fermée à son extrémité opposée, par laquelle sortent les fumées, par un disque de fermeture plat (16), de préférence de forme circulaire, qui est joint hermétiquement à un court manchon cylindrique vertical (17) dirigé vers le haut ; et **dans lequel,** dans ce cas également, le disque de fermeture supérieur (16) et le manchon vertical (17) sont faits du même matériau et formés de la même manière que les éléments correspondants de l'extrémité inférieure de ladite enveloppe extérieure (11).

3. Dispositif selon la revendication 2, **caractérisé en ce que** des moyens de détection de température, tels que des pyromètres optiques, sont insérés et fixés à l'intérieur de ladite chambre intérieure (19), pénétrant dans la chambre par des trous traversants correspondants (30) pratiqués dans ladite enveloppe extérieure (11), la paroi périphérique (21) et les matériaux isolants (24, 27), qui sont aptes à détecter la température intérieure du module de chauffage (5), lesdits moyens de détection étant connectés électriquement avec ledit générateur de micro-ondes (32) et les autres composants électriques et électroniques du dispositif, avec au moins une station centrale de contrôle du dispositif, destinée à contrôler le fonctionnement desdits moyens de détection et desdits composants électriques et électroniques.

4. Dispositif selon les revendications précédentes, **caractérisé en ce que** ledit carneau (7) est formé de manière à pouvoir accueillir ledit module de chauffage (5) et ledit module (6) de récupération partielle des fumées reliés l'un à l'autre et agencés en position verticale, et fixés dans la chambre intérieure (57) du carneau (7), ledit carneau (7) étant formé d'une paroi inférieure circulaire fermée et inclinée, ayant des inclinaisons (58, 59) symétriques l'une à l'autre, dont la partie inférieure est jointe au conduit (9) de la chambre de combustion (8), et dont la partie supérieure est jointe à la paroi cylindrique extérieure (60) du carneau (7) ; dans lequel la partie supérieure du carneau (7) est également formée d'une paroi supérieure circulaire inclinée, ayant des inclinaisons (61, 62) symétriques l'une à l'autre et opposées à celles de la paroi inférieure, et la paroi supérieure comporte également la sortie (63) du carneau (7), par laquelle les fumées purifiées des substances polluantes sortent, lesquelles fumées traversent également ledit module (6) de récupération partielle des fumées, et circulent vers le haut dans la direction A, et sont acheminées à l'intérieur du module de chauffage (5) à travers une paroi circulaire inclinée et ouverte, ayant des inclinaisons (64, 65) symétriques l'une à l'autre, laquelle paroi est jointe sur sa partie supérieure à une portion de conduit (66) de forme cylindrique, dont la partie supérieure est formée de manière à être vissée et fixée à ladite bride de jonction correspondante (14) de l'entrée du module de chauffage (5), ledit module de chauffage (5) ayant un tirage naturel.

5. Dispositif selon les revendications précédentes, **caractérisé en ce que** ledit module (6) de récupération partielle des fumées est essentiellement constitué d'un conduit cylindrique (67), à l'extrémité libre duquel est fixée une bride circulaire étroite et plate (68), formée de sorte à être vissée et fixée à la bride de jonction plate correspondante (18) du module de chauffage (5), de manière à réunir lesdits deux modules (5 et 6) et à permettre le passage des fumées sortant du module de chauffage (5) vers la cavité interne du même conduit cylindrique (67) ;
dans lequel l'autre extrémité dudit conduit (67) est jointe à une extrémité correspondante d'une partie tronconique creuse à l'intérieur (69), qui s'élargit progressivement dans la direction longitudinale du module (6) jusqu'à son autre extrémité de largeur maximale, qui est jointe à une extrémité d'un conduit cylindrique allongé (70), entourant un corps central allongé correspondant (71) fixé à l'intérieur, qui a de préférence une forme cylindrique et est pourvu d'un ensemble de tubes traversants horizontaux (72) séparés les uns des autres et disposés dans le corps central (71) et dans la direction longitudinale de celui-ci, destinés au passage des fumées, de tels tubes (72) s'étendant sur toute la longueur du conduit allongé (70) et du corps central (71) jusqu'à l'extrémité ouverte (73) de ce dernier, qui se trouve en position rapprochée et en regard de la sortie (63) dudit carneau (7) ;
dans lequel les fumées chaudes purifiées provenant du module de chauffage (5) sont amenées à circuler dans lesdits tubes internes (72), dont une extrémité communique avec les cavités internes du conduit cylindrique (67) et de la partie tronconique (69), de sorte que les fumées circulant dans de tels tubes internes (72) sont ensuite en partie évacuées par ladite sortie supérieure (63) et en partie récupérées en passant par ledit conduit de récupération (76), qui est joint à une extrémité du tuyau de raccordement de sortie (75), dont l'autre extrémité est jointe à un trou traversant pratiqué dans ledit conduit allongé (70) ;
dans lequel des trous traversants (74) proches l'un de l'autre sont pratiqués le long dudit conduit cylindrique (67), en vue de l'insertion et de la fixation de moyens de détection de mesure, qui sont calibrés pour détecter les paramètres relatifs aux fumées en circulation, et en particulier le débit, la température et la composition des fumées entrant dans le module (6) de récupération partielle des fumées, après être passées par le module de chauffage (5), dans lequel, comme moyen de détection du débit, il est par exemple possible d'utiliser un instrument de mesure de la pression différentielle, et comme moyen de détection de la température et de la composition des fumées, il est par exemple possible d'utiliser un analyseur de fumées connu en soi de type professionnel, de sorte que la détection de ces paramètres permet également de connaître la composition des substances contenues dans les fumées en ce qui concerne leurs composants individuels, après la réduction des fumées dans le module de chauffage (5), tous lesdits moyens de détection de mesure étant connectés électriquement avec la station centrale de contrôle du présent dispositif ainsi qu'avec les composants électriques et électroniques du magnétron (32) et étant contrôlés par la même station centrale.

6. Procédé de réduction de substances polluantes liquides, gazeuses et/ou solides de diverses sortes, produites par diverses sources et contenues dans les fumées d'échappement issues des processus de combustion de substances de diverses sortes, le procédé étant appliqué dans un dispositif de l'une quelconque des revendications 1 à 5, dans lequel le procédé comprend les étapes suivantes :
- génération de micro-ondes au moyen d'un magnétron (32), appliqué audit module de chauffage (5), lorsque les fumées chaudes contenant les substances polluantes émises circulent dans les cavités internes d'un ou plusieurs desdits tubes allongés (25) en matériau accepteur et sont dirigées vers l'extrémité de sortie du même module ;
- transmission des micro-ondes générées par le magnétron (32) à travers certains trous traversants (31) dudit conteneur allongé (10), lesquelles micro-ondes traversent en séquence ledit matériau isolant (27), dans un premier temps, puis toutes les parois périphériques (26) et les cavités internes (38) des tubes allongés (25), dont le matériau accepteur génère des rayonnements infrarouges qui irradient dans la cavité interne du même tube, entraînant un chauffage supplémentaire des fumées chaudes en circulation, et une réflexion multiple simultanée des micro-ondes dans les cavités internes délimitées par les parois périphériques (26) de chaque tube allongé (25) ;
- génération, en raison des multiples réflexions des micro-ondes entre les parois périphériques de chaque tube (25), du contact des micro-ondes avec des températures élevées, des différentes inhomogénéités et densités des gaz contenus dans les fumées en circulation, de quelques pics d'énergie des micro-ondes qui sont étonnamment distribués de manière aléatoire et à des positions variables et différentes dans les cavités internes (38) de tous les tubes (25), de sorte qu'en dimensionnant de manière appropriée les caractéristiques des micro-ondes traversant ladite chambre intérieure (19), ainsi qu'en adaptant la taille et la qualité du matériau accepteur des tubes allongés (25), les pics d'énergie ainsi générés et distribués de manière aléatoire peuvent atteindre des températures très élevées, dans une plage comprise entre environ 1 200 °C et environ 2 600 °C, de manière à chauffer les fumées à ces températures très élevées, dissociant ainsi les molécules des différents composés constituant les substances polluantes des fumées, rejetant par conséquent dans l'atmosphère des fumées contenant un pourcentage élevé de substances constitutives uniques non polluantes.

7. Procédé de réduction de substances polluantes liquides, gazeuses et/ou solides de diverses sortes selon la revendication 6, **caractérisé en ce que** les fumées réduites circulant à travers ledit module (6) de récupération partielle des fumées et rejetées en partie dans l'environnement extérieur sont mises directement en contact avec la température plus basse régnant dans le module (6), ce qui les refroidit rapidement et empêche ainsi que les substances réduites contenues dans les fumées rejetées puissent se recombiner chimiquement entre elles et former à nouveau les substances polluantes réduites ;
et dans lequel les fumées récupérées en partie en traversant ledit module (6) de récupération partielle des fumées et contenant un plus grand pourcentage d'oxygène, produit par les dissociations moléculaires à l'intérieur du module de chauffage (5), sont aspirées et amenées à circuler dans ledit conduit de récupération de fumées (76), et sont finalement réintroduites dans ladite chambre de combustion (8), alimentant cette dernière avec l'oxygène supplémentaire des mêmes fumées, afin d'améliorer la combustion dans la même chambre de combustion.
